# EUROPEAN PATENT APPLICATION

(11) **EP 3 733 023 A1**
(43) Date of publication of application: **04.11.2020**
(21) Application number: 18895180.0
(22) Date of filing: 21.12.2018
(51) Int. Cl.: A47F 7/00

(54) **AEROSOL ASPIRATOR BRAND DESIGNATION SYSTEM**

(30) Priority: 26.12.2017 JP 2017249807
(71) Applicant: Japan Tobacco Inc., Tokyo 105-8422 (JP)
(72) Inventor: OJIMA, Atsushi, Tokyo 105-8422 (JP)
(74) Representative: Hoffmann Eitle
(86) International application number: PCT/JP2018/047372
(87) International publication number: WO 2019/131554

(57) **Abstract**

A brand designation system for an aerosol inhaler includes a brand designation receiving unit (18) that receives designation of a brand by a brand designation device (10) that is the aerosol inhaler or an auxiliary device of the aerosol inhaler, the brand designation receiving unit (18) includes a second communication unit (second wireless communication unit (20), for example) that communicates with a first communication unit (first wireless communication unit (15), for example) included in the brand designation device (10), and a type of a product can be designated from among a plurality of types of products including consumables of the aerosol inhaler when the second communication unit and the first communication unit communicate with each other.

## Description

### TECHNICAL FIELD

The present invention relates to a brand designation system for an aerosol inhaler.

### BACKGROUND ART

At a store such as a general convenience store, various brands of tobacco products are displayed in a fixture for each brand, and (1) when a purchaser designates a brand, a clerk selects that brand of tobacco product from the fixture, or (2) the purchaser takes out a desired brand of tobacco product from the fixture in person and purchases the tobacco product. Note that the tobacco product referred to here does not mean an individual cigarette to be used for smoking, but means a rectangular parallelepiped package containing a plurality of cigarettes or a rectangular parallelepiped package containing other tobacco products.

Patent Document 1 describes a dispensing device that automatically dispenses a desired brand of tobacco product. In this dispensing device, a brand to be purchased by a purchaser is designated by the purchaser selectively pressing a switch corresponding to the desired brand among a plurality of brand selection switches for selecting a brand.

Furthermore, in recent years, aerosol inhalers such as heated tobaccos have rapidly spread to the market. Packages containing consumables of the aerosol inhaler are also generally rectangular parallelepiped. The packages are also displayed in a similar manner to the tobacco products and are sold at a store such as a convenience store.

### CITATION LIST

### PATENT DOCUMENTS

Patent Document 1: JP 2011-207575 A

### SUMMARY OF THE INVENTION

### PROBLEM TO BE SOLVED BY THE INVENTION

Since there are a large number of brands in tobacco products, it takes a certain amount of time in the dispensing device of Patent Document 1 to search for and press a brand selection switch corresponding to a brand requested by a purchaser. For this reason, it is desired to be able to designate a brand quickly.

Similarly, it is also desired to be able to designate a brand quickly, for a package containing consumables of the aerosol inhaler.

The present invention has been made in view of the problem described above, and provides a brand designation system capable of quickly designating a brand of a product or the like containing a consumable of an aerosol inhaler.

### MEANS FOR SOLVING THE PROBLEM

According to the present invention, there is provided a brand designation system for an aerosol inhaler, including a brand designation receiving unit that receives designation of a brand by a brand designation device that is the aerosol inhaler or an auxiliary device of the aerosol inhaler, wherein the brand designation receiving unit includes a second communication unit that communicates with a first communication unit included in the brand designation device, and a type of a product can be designated from among a plurality of types of products including consumables of the aerosol inhaler when the second communication unit and the first communication unit communicate with each other.

### EFFECT OF THE INVENTION

According to the present invention, it is possible to quickly designate a brand of a product or the like containing a consumable of an aerosol inhaler.

### BRIEF DESCRIPTION OF THE DRAWINGS

Fig. 1 is a block diagram of a brand designation system for an aerosol inhaler according to a first embodiment.
Figs. 2A and 2B are a perspective view and an exploded perspective view, respectively, showing the aerosol inhaler according to the first embodiment.
Fig. 3A is a perspective view showing an inhaler body portion of the aerosol inhaler according to the first embodiment, Fig. 3B is a perspective view showing a charger of the aerosol inhaler according to the first embodiment, Fig. 3C is a perspective view showing a charging plug of the aerosol inhaler according to the first embodiment, and Fig. 3D is a perspective view showing a case of the aerosol inhaler according to the first embodiment.
Fig. 4A is a perspective view showing an example of a product, and Figs. 4B and 4C are perspective views each showing an example of contents of a package of the product.
Fig. 5 is a perspective view for describing an operation when a user who tries to purchase the product designates a brand in the first embodiment.
Fig. 6 is a side sectional view of a fixture included in the brand designation system for an aerosol inhaler according to the first embodiment.
Fig. 7 is a diagram showing an example of a screen displayed when a user designates a brand by the brand designation system for an aerosol inhaler according to the first embodiment.
Fig. 8 is a block diagram of a brand designation system for an aerosol inhaler according to a second embodiment.
Fig. 9 is a diagram showing an example of a screen displayed when a user designates a brand by a brand designation system for an aerosol inhaler according to a third embodiment.
Fig. 10 is a block diagram of a brand designation system for an aerosol inhaler according to a fifth embodiment.
Fig. 11 is a block diagram of a brand designation system for an aerosol inhaler according to a sixth embodiment.
Fig. 12 is a block diagram of a brand designation system for an aerosol inhaler according to an eighth embodiment.
Fig. 13 is a perspective view of a fixture included in the brand designation system for an aerosol inhaler according to the eighth embodiment.
Fig. 14 is a diagram showing an example of a screen displayed when a battery residual capacity of a brand designation device is determined by the brand designation system for an aerosol inhaler according to the eighth embodiment.
Fig. 15 is a diagram showing an example of a screen displayed when a battery residual capacity of a brand designation device is determined by a brand designation system for an aerosol inhaler according to a ninth embodiment.
Fig. 16 is a block diagram of a brand designation system for an aerosol inhaler according to a tenth embodiment.
Fig. 17 is a diagram showing an example of a screen displayed when a deterioration state of a brand designation device is determined by the brand designation system for an aerosol inhaler according to the tenth embodiment.
Figs. 18A and 18B are diagrams showing an aerosol inhaler according to a modification, Fig. 18A is an exploded perspective view showing a state where a consumable is not mounted to the aerosol inhaler, and Fig. 18B is a perspective view showing a state where the consumable is mounted the aerosol inhaler.
Figs. 19A and 19B are diagrams showing the aerosol inhaler and a charger according to the modification, Fig. 19A is a perspective view showing a state where the aerosol inhaler is located outside the charger thereof, and Fig. 19B is a perspective view showing a state where the aerosol inhaler is contained in the charger.

### DESCRIPTION OF EMBODIMENTS

Hereinafter, embodiments of the present invention will be described with reference to the drawings. Note that, in all the drawings, similar components are denoted by the same reference numerals, and description thereof will not be repeated.

### [First Embodiment]

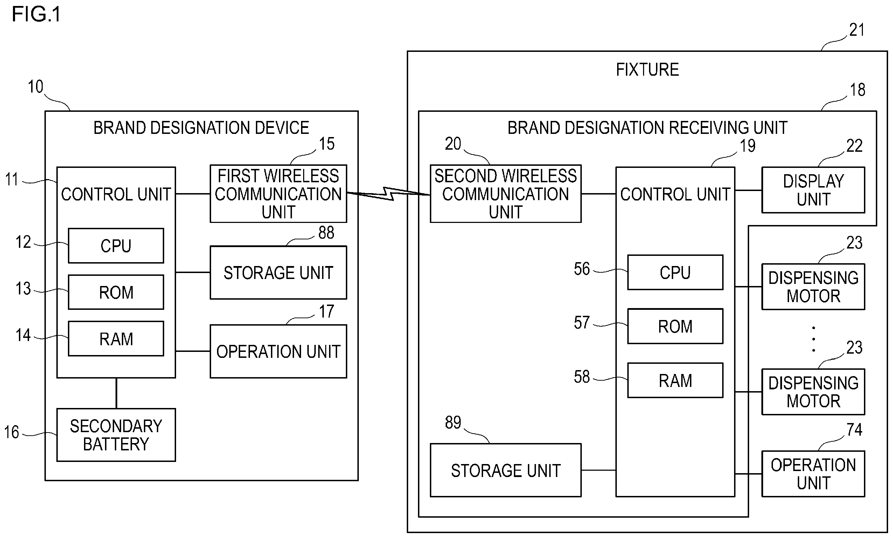

First, a first embodiment will be described with reference to Figs. 1 to 7.

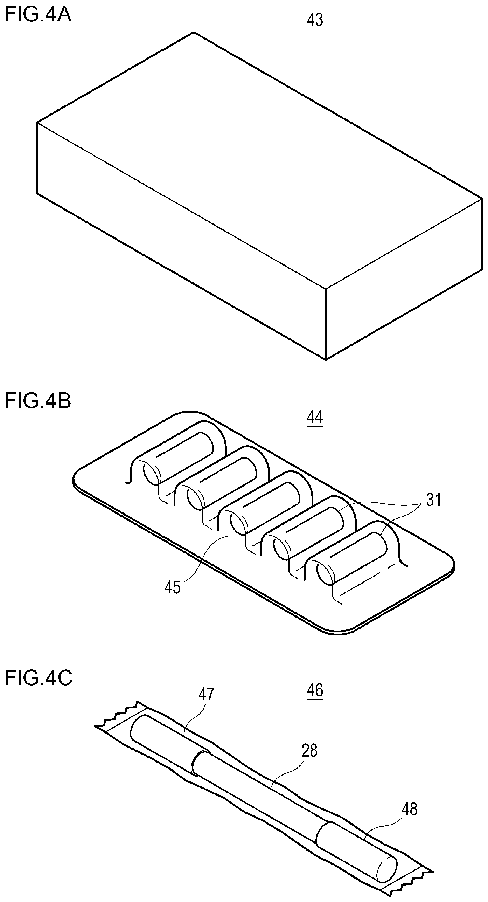

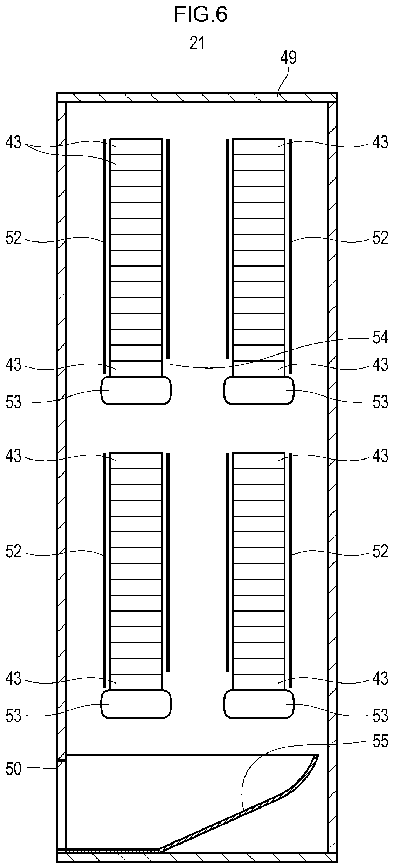

As shown in Fig. 1, a brand designation system for an aerosol inhaler (hereinafter, simply referred to as a brand designation system in some cases) according to the present embodiment includes a brand designation receiving unit 18 that receives designation of a brand by a brand designation device 10 that is an aerosol inhaler or an auxiliary device of the aerosol inhaler. The brand designation receiving unit 18 includes a second communication unit (second wireless communication unit 20, for example) that communicates with a first communication unit (first wireless communication unit 15, for example) included in the brand designation device 10. When the second communication unit and the first communication unit communicate with each other, it is possible to designate a type of product 43 from among a plurality of types of products 43 (Figs. 4A and 6) including consumables of the aerosol inhaler.

For this reason, according to the present embodiment, it is possible to quickly designate a desired type of product 43 from among the plurality of types of products 43 including consumables of the aerosol inhaler.

As shown in Fig. 1, the brand designation device 10 includes, for example, the first wireless communication unit 15 described above, a secondary battery 16 that is a power supply of the brand designation device 10, an operation unit 17, a control unit 11, and a storage unit 88 that is a nonvolatile memory.

The control unit 11 includes a ROM 13 that stores and holds a control program, a CPU 12 that executes a control operation in accordance with the control program, and a RAM 14 that functions as a work area of the CPU 12.

The control unit 11 controls an operation of the first wireless communication unit 15, reads information stored in the storage unit 88, and writes (performs processing of storing) information to the storage unit 88, for example. Furthermore, a detection signal of an operation performed on the operation unit 17 is input to the control unit 11.

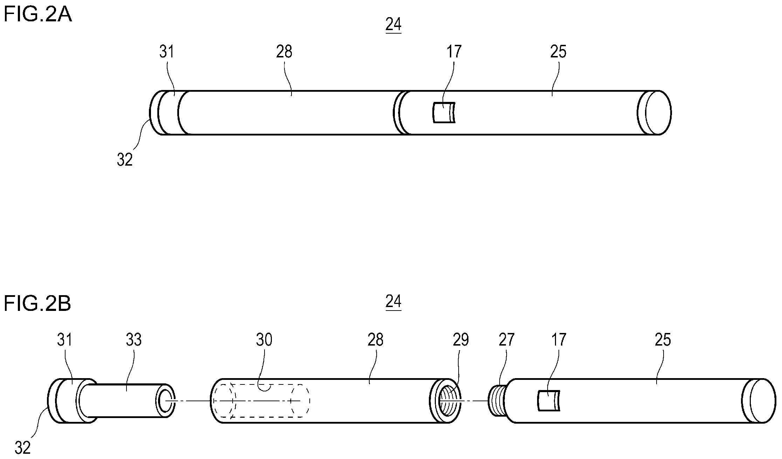

In the present invention, the form of the brand designation device 10 is not particularly limited, but in the case of the present embodiment, an aerosol inhaler 24 (Fig. 2A) to be described below corresponds to the brand designation device 10.

As shown in Figs. 2A and 2B, the aerosol inhaler 24 is a heated tobacco inhaler, and includes an inhaler body portion 25, a cartridge 28 that is detachably mounted to the inhaler body portion 25, and a capsule 31 that is detachably inserted into and fixed to the cartridge 28.

The inhaler body portion 25 is formed, for example, in a round bar shape. The control unit 11, the first wireless communication unit 15, and the secondary battery 16 described above are incorporated in the inhaler body portion 25. In addition, the operation unit 17 described above is, for example, a push button type unit provided on an outer peripheral surface of the inhaler body portion 25. The inhaler body portion 25 includes a charging terminal 27 (Fig. 2B) at one end thereof. The charging terminal 27 is formed, for example, in a male screw shape.

The cartridge 28 is, for example, formed in a round bar shape having substantially the same diameter as the inhaler body portion 25. At one end of the cartridge 28, a female screw-shaped mounting portion 29 (Fig. 2B) for detachably mounting the cartridge 28 to the charging terminal 27 of the inhaler body portion 25 is formed. At the other end of the cartridge 28, an insertion hole 30 (Fig. 2B) for inserting and fixing the capsule 31 is formed.

The capsule 31 includes a mounted portion 33 to be inserted into the insertion hole 30 and a suction port 32 to which a mouth of a user is applied when aerosol is inhaled using the aerosol inhaler 24. For example, the outer diameter of a portion of the capsule 31 exposed from the cartridge 28 is substantially the same as the outer diameters of the cartridge 28 and the inhaler body portion 25. The capsule 31 is filled with a filler of tobacco components containing nicotine.

In a state where the secondary battery 16 of the inhaler body portion 25 is charged, the mounting portion 29 of the cartridge 28 is screwed with the charging terminal 27 of the inhaler body portion 25 while the mounted portion 33 of the capsule 31 is inserted into the insertion hole 30 of the cartridge 28, so that the aerosol inhaler 24 is assembled, and aerosol can be inhaled using the aerosol inhaler 24.

In the state where the aerosol inhaler 24 is assembled, as shown in Fig. 2A, the inhaler body portion 25, the cartridge 28 and the capsule 31 are linearly coupled, and the aerosol inhaler 24 has a single round bar shape.

Note that, in the present invention, the brand designation device 10 is not limited to the entire aerosol inhaler 24, and may be the inhaler body portion 25, which is a part of a configuration of the aerosol inhaler 24, or may be an auxiliary device of the aerosol inhaler 24.

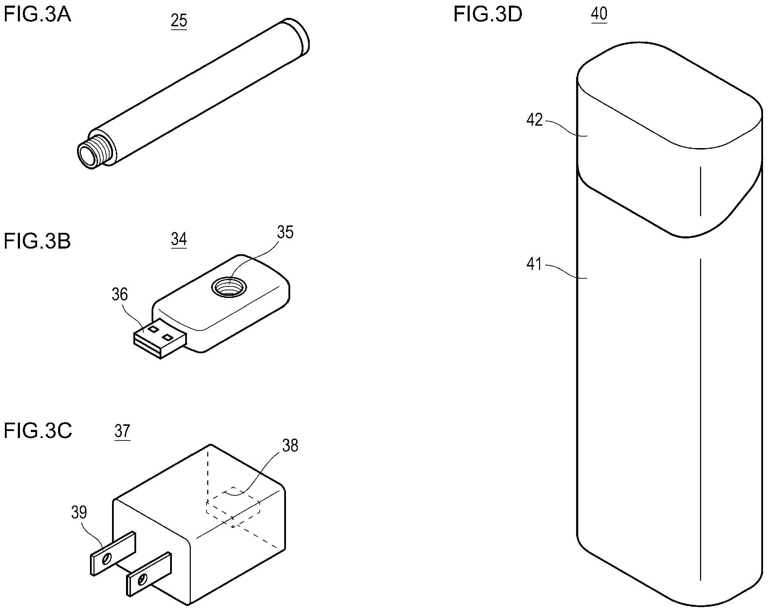

As the auxiliary device of the aerosol inhaler 24, a charger 34 (Fig. 3B) used for charging the secondary battery 16 of the inhaler body portion 25, a charging plug 37 (Fig. 3C), and a case 40 (Fig. 3D) that contains the aerosol inhaler 24 when the aerosol inhaler 24 is carried or stored are exemplified.

As shown in Fig. 3B, the charger 34 includes a terminal 36 such as a USB terminal and a female screw-shaped charging terminal insertion portion 35 to which the charging terminal 27 of the inhaler body portion 25 is mounted.

As shown in Fig. 3C, the charging plug 37 includes a terminal insertion portion 38 into which the terminal 36 of the charger 34 is inserted and a power supply terminal 39 inserted into a commercial power outlet.

As shown in Fig. 3D, the case 40 includes, for example, a case body 41 and a lid portion 42 connected to the case body 41 via a hinge.

The secondary battery 16 of the inhaler body portion 25 can be charged when the terminal 36 of the charger 34 is inserted into a USB port of a personal computer or the like and the charging terminal 27 of the inhaler body portion 25 is screwed and mounted to the charging terminal insertion portion 35 of the charger 34. Alternatively, the secondary battery 16 can also be charged when the power supply terminal 39 of the charging plug 37 is inserted into a commercial power outlet, the power supply terminal 39 of the charging plug 37 is inserted into the terminal insertion portion 38 of the charging plug 37, and the charging terminal 27 of the inhaler body portion 25 is mounted to the charging terminal insertion portion 35 of the charger 34.

In the aerosol inhaler 24, for example, the capsule 31 and the cartridge 28 are consumables. For example, a set (kit) of the capsule 31 and the cartridge 28 is contained in the common rectangular parallelepiped package, and is distributed and sold as the product 43 (Fig. 4A).

More specifically, for example, the package of the product 43 contains a collective package 44 (Fig. 4B) in which a plurality of (five, for example) capsules 31 is contained in a film 45 and a cartridge package 46 (Fig. 4C) in which caps 48 are mounted to both ends of the cartridge 28 (one cartridge 28, for example) and a film 47 contains the cartridge 28 and the caps 48.

Note that, in the present invention, the aerosol inhaler is not limited to the heated tobacco inhaler, and may be an inhaler for inhaling aerosol containing no nicotine component.

As shown in Fig. 1, the brand designation receiving unit 18 includes, for example, the second wireless communication unit 20 described above, a control unit 19, a display unit 22 such as a touch panel type liquid crystal display device that can be touched and operated by a user, and a storage unit 89 that is a nonvolatile memory. The fixture 21 may further include an operation unit 74 that a clerk operates.

The control unit 19 includes a ROM 57 that stores and holds a control program, a CPU 56 that executes a control operation in accordance with the control program, and a RAM 58 that functions as a work area of the CPU 56.

For example, the control unit 19 controls operations of the second wireless communication unit 20, the display unit 22, and a dispensing motor 23, which will be described below, reads information stored in the storage unit 89, and writes (performs processing of storing) information to the storage unit 89. Furthermore, a detection signal of an operation performed on the display unit 22 and the operation unit 74 is input to the control unit 19.

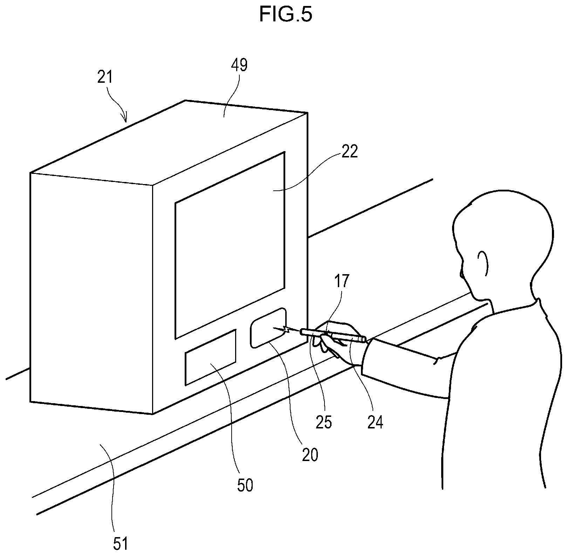

In the case of the present embodiment, the brand designation system includes a fixture 21 (Figs. 1 and 5) that contains the plurality of types of products 43.

The fixture 21 includes, for example, a housing 49 (Fig. 5) in which a product containing portion that contains the plurality of types of products 43 is provided. The shape of the housing 49 is not particularly limited, but may be, for example, rectangular parallelepiped. The fixture 21 is installed, for example, on a cashier counter 51 (Fig. 5) of a store such as a convenience store.

In the case of the present embodiment, the housing 49 is provided with the brand designation receiving unit 18.

As shown in Fig. 6, the fixture 21 includes a plurality of product columns 52 provided in the housing 49. In each product column 52, the plurality of products 43 is contained in a vertically stacked state.

The same type (brand) of products 43 are contained in one product column 52, and the product columns 52 each contain a different brand of products 43. However, there may be a plurality of product columns 52 containing the same brand of products 43.

In addition, the product column 52 may contain, as the products 43 in a dispensable manner, auxiliary devices of the aerosol inhaler 24, such as the charger 34, the charging plug 37 or the case 40, and other accessories, in addition to the products 43 that are consumables. Furthermore, the product column 52 may contain the inhaler body portion 25 as the product 43 in a dispensable manner so that a user can purchase a replacement of the inhaler body portion 25 or receive distribution of a replacement of the inhaler body portion 25 when the inhaler body portion 25 fails.

At a lower end of the product column 52, a discharging port 54 for discharging a lowermost product 43 in the product column 52 is formed.

The fixture 21 further includes a dispensing portion 53 arranged below each product column 52. Each dispensing portion 53 includes the dispensing motor 23 (Fig. 1).

When the dispensing motor 23 rotates under control of the control unit 19, the dispensing portion 53 discharges the lowermost product 43 of the product column 52 from the discharging port 54 and drops the product 43.

In the housing 49, a shooter 55 that captures the product 43 discharged from the product column 52 and guides the product 43 to flow down is provided.

On the housing 49, a takeout port 50 for taking out the product 43 dispensed on the shooter 55 to the outside is formed.

As shown in Fig. 5, the takeout port 50 may be arranged on a surface of the housing 49 facing a purchaser (user) who purchases the product 43. Alternatively, the takeout port 50 may be arranged on a surface facing the inside of the cashier counter 51, that is, on the clerk side.

In the case of the present embodiment, the storage unit 88 of the brand designation device 10 stores brand information that is information regarding a inhale brand of which a user of the aerosol inhaler 24 inhales.

The processing of causing the storage unit 88 of the brand designation device 10 to store brand information is, for example, performed in advance by the user. This processing may be processing of causing the storage unit 88 to store information in cooperation with a portable information terminal (smartphone) or a personal computer (PC) of the user, for example.

In addition, in the processing of causing the storage unit 88 of the brand designation device 10 to store brand information, the storage unit 88 may store product information of the brand designation device 10 and personal information of the user together.

When the user designates a brand of the product 43 to be purchased using the brand designation device 10, the control unit 11 reads brand information from the storage unit 88, and causes the first wireless communication unit 15 to transmit the brand information to the second wireless communication unit 20 of the brand designation receiving unit 18. Thus, the second wireless communication unit 20 of the brand designation receiving unit 18 acquires the brand information from the first wireless communication unit 15.

The storage unit 89 of the brand designation receiving unit 18 stores, for example, a table indicating a correspondence relationship between various pieces of brand information and various products 43. Furthermore, the storage unit 89 stores a table indicating a correspondence relationship between the various products 43 and the product columns 52 in the fixture 21.

The control unit 19 of the brand designation receiving unit 18 recognizes a product 43 associated with the brand information acquired by the second wireless communication unit 20 as a designated product 43. Furthermore, the control unit 19 of the brand designation receiving unit 18 operates the dispensing motor 23 of the dispensing portion 53 arranged below a product column 52 corresponding to the designated product 43 (product 43 recognized as the designated product) to perform the processing of dispensing the designated product 43.

As described above, the brand designation device 10 includes a brand information storage unit (storage unit 88) that stores brand information that is information regarding an inhale brand of a user of the aerosol inhaler 24, the second wireless communication unit 20 acquires the brand information from the first wireless communication unit 15 by wireless communication, and the brand designation receiving unit 18 recognizes a product 43 associated with the brand information acquired by the second wireless communication unit 20 as a designated product 43.

In addition, the brand designation system includes the fixture 21 including a product containing portion (aggregate of the plurality of product columns 52) that contains the plurality of types of products 43 and the dispensing portion 53 that dispenses, from the product containing portion, a product 43 of a type designated by the wireless communication between the second wireless communication unit 20 and the first wireless communication unit 15.

Note that, for example, there may be a step of waiting for age verification of the user (verifying that the user is an adult) by a clerk, between the step in which the brand designation receiving unit 18 recognizes the designated product 43 and the step in which the brand designation receiving unit 18 dispenses the product 43. In this case, for example, when the clerk operates a button of the operation unit 74 for verifying that the user is an adult after the brand designation receiving unit 18 recognizes the designated product 43, the designated product 43 is dispensed. Meanwhile, when the clerk operates a button of the operation unit 74 for verifying that the user is not an adult, the product 43 is not dispensed.

Here, the product 43, a brand of which can be designated by using the brand designation device 10, is not limited to a consumable of the aerosol inhaler 24, but preferably includes a tobacco product containing a plurality of cigarettes and a tobacco product containing other tobacco products. Examples of other tobacco products include snuff tobaccos, pipe tobaccos, and related articles such as an inhaler used for those other tobacco products.

Therefore, the brand information storage unit may store brand information regarding cigarettes or other tobacco products that the user smokes.

In addition, brand information that can be stored in the brand information storage unit may be one type or a plurality of types. Furthermore, when a plurality of types of brand information is stored in the brand information storage unit, additional information indicating a priority order may be added to the brand information.

In addition, after the designated product 43 is dispensed or before the designated product 43 is dispensed, it may be possible to make payment of the price of the product 43 at the brand designation receiving unit 18 or the fixture 21.

As described above, the brand designation system includes a payment processing unit that makes payment of the price of the product 43 when the second wireless communication unit 20 and the first wireless communication unit 15 perform wireless communication.

The payment processing unit may perform the payment processing using personal identification information of the user acquired by the second wireless communication unit 20 from the first wireless communication unit 15, for example.

A method of the payment is not particularly limited. For example, payment by inputting cash to the brand designation receiving unit 18 or the fixture 21, payment using a cash card or debit card, and payment using various prepaid cards are exemplified.

Here, if communication between the second wireless communication unit 20 and the first wireless communication unit 15 enables user authentication as to whether the user is qualified as a purchaser (adult authentication or the like), it is also possible for the user to make payment without an operation by the clerk.

It is preferable that the first wireless communication unit 15 and the second wireless communication unit 20 perform short-range wireless communication. A system of the short-range wireless communication is not particularly limited, but may be, for example, Near Field Communication (NFC). The NFC is also known as Near Field radio Communication. Furthermore, it is also preferable that a system of the wireless communication between the first wireless communication unit 15 and the second wireless communication unit 20 has a communication range wider than that of the NFC and narrower than that of Bluetooth (registered trademark) communication.

In particular, when a plurality of brand designation receiving units 18 exists in one store (for example, a plurality of fixtures 21 exists in one store), it is preferable that the plurality of brand designation receiving units 18 is arranged out of a communication range with respect to each other. In other words, it is preferable that the plurality of brand designation receiving units 18 is arranged apart from each other so that the second wireless communication units 20 of the brand designation receiving units 18 do not simultaneously perform wireless communication with the same first wireless communication unit 15. By doing so, the user can selectively cause the first wireless communication unit 15 of the brand designation device 10 to communicate with a second wireless communication unit 20 of a brand designation receiving unit 18 intended by the user.

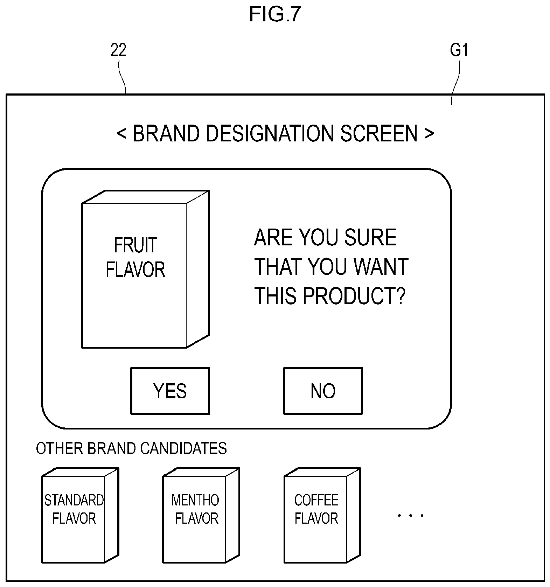

Next, an example of an operation of designating the product 43 by the brand designation device 10 will be described with reference to Figs. 5 and 7.

First, as shown in Fig. 5, a user of the aerosol inhaler 24 (that is, the brand designation device 10) operates the operation unit 17 (for example, pressing operation) in a state where the aerosol inhaler 24 is brought close to the second wireless communication unit 20 of the fixture 21.

Then, the control unit 11 recognizes this pressing operation and causes the first wireless communication unit 15 to transmit brand information to the second wireless communication unit 20.

The control unit 19 of the brand designation receiving unit 18 recognizes a type of a product 43 corresponding to the brand information acquired by the second wireless communication unit 20 from the first wireless communication unit 15, and for example, causes the display unit 22 to display a screen G1 as shown in Fig. 7 (screen for designating a brand).

As shown in Fig. 7, on the screen G1, for example, an image of the product 43 corresponding to the brand information is displayed in a large size, and a confirmation message such as "Are you sure that you want this product?" is displayed. Furthermore, when a plurality of types of brand information to which respective priority orders are added is transmitted from the first wireless communication unit 15 to the second wireless communication unit 20, as shown in Fig. 7, other candidate brands may be displayed together in the priority order.

When the user performs a touch operation on a display location of "Yes" on the screen G1 in Fig. 7, the type of the product 43 purchased by the user is determined. Thereafter, for example, a screen for selecting the number of products 43 to be purchased is displayed, and an operation of selecting the number is performed on the screen, or the number of products to be purchased is verbally told to a clerk, and the clerk performs an operation of setting the number of products to be purchased. As a result, the products 43 are dispensed from the fixture 21 by the selected number of products to be purchased. Note that, as described above, before the product 43 is dispensed, the user authentication and the payment processing may be performed.

As described above, the brand designation system includes a designated product dispensing operation unit (display unit 22, which is a touch panel, of the brand designation receiving unit 18, for example) that receives an operation of requesting dispensation of a product of a type designated by wireless communication, and the dispensing portion 53 dispenses the designated type of product in response to the operation on the designated product dispensing operation unit.

On the other hand, when the user performs a touch operation on a display location of "No" on the screen G1 in Fig. 7, for example, a confirmation message such as "Would you like to select another product?" is displayed, or a confirmation message such as "Would you like to finish purchasing the product?" is displayed, so that the user can reselect the brand or end the designation of the brand.

### [Second Embodiment]

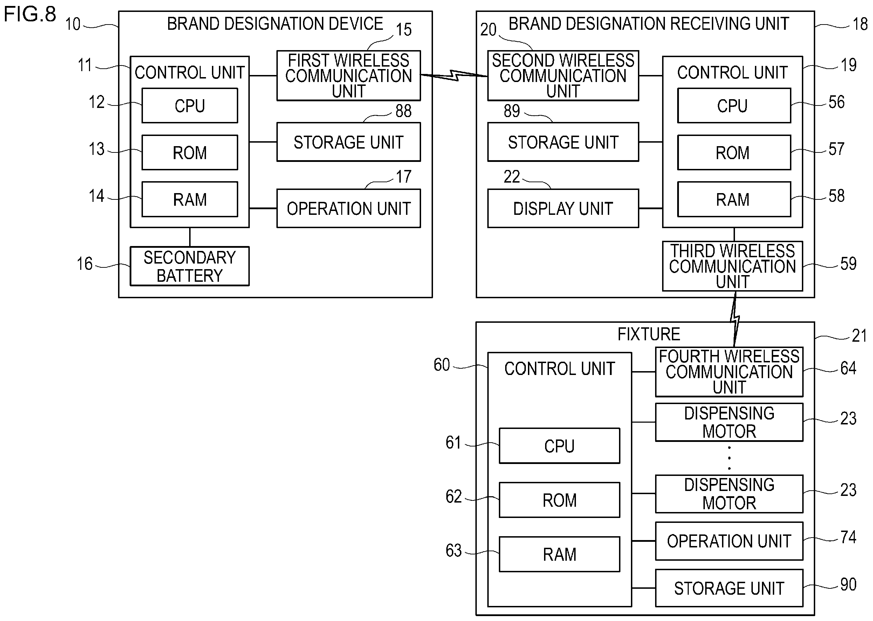

Next, a second embodiment will be described with reference to Fig. 8.

A brand designation system according to the present embodiment is different from the brand designation system according to the above-described first embodiment in the points to be described below, and similarly configured to the brand designation system according to the above-described first embodiment in other points.

In the above-described first embodiment, the example has been described in which the brand designation receiving unit 18 is provided in the fixture 21. In the present embodiment, an example will be described in which a brand designation receiving unit 18 and a fixture 21 are separated. In the present embodiment, when the brand designation receiving unit 18 recognizes a designated brand, the brand designation receiving unit 18 outputs a dispensing command to the fixture 21 by communication, and the fixture 21 dispenses a product 43 in response to the dispensing command.

As shown in Fig. 8, the brand designation receiving unit 18 includes a third wireless communication unit 59 for performing wireless communication with the fixture 21. On the other hand, the fixture 21 includes a fourth wireless communication unit 64 for performing wireless communication with the brand designation receiving unit 18, a control unit 60, and a storage unit 90 that is a nonvolatile memory.

Note that, in the present invention, the communication between the brand designation receiving unit 18 and the fixture 21 is not limited to wireless communication, but may be wired communication.

The control unit 60 includes a ROM 62 that stores and holds a control program, a CPU 61 that executes a control operation in accordance with the control program, and a RAM 63 that functions as a work area of the CPU 61. The storage unit 90 stores a table indicating a correspondence relationship between various products 43 and product columns 52 in the fixture 21. In the case of the present embodiment, the control unit 60 controls an operation of a dispensing motor 23. Furthermore, a detection signal of an operation performed on an operation unit 74 is input to the control unit 60.

In the case of the present embodiment, the brand designation receiving unit 18 can be installed, for example, on a cashier counter 51 (see Fig. 5). In addition, the fixture 21 can be installed on a counter (not shown) arranged further behind a space for a clerk behind the cashier counter 51.

### [Third Embodiment]

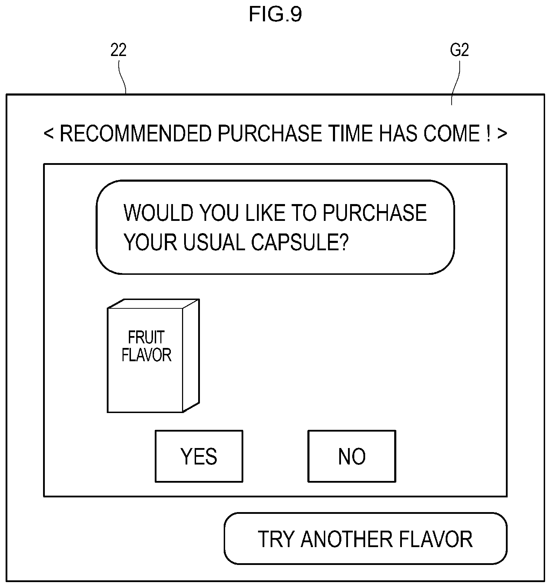

Next, a third embodiment will be described with reference to Fig. 9.

A brand designation system according to the present embodiment is different from the brand designation system according to the above-described first embodiment or second embodiment in the points to be described below, and similarly configured to the brand designation system according to the above-described first embodiment or second embodiment in other points.

In the case of the present embodiment, a brand designation receiving unit 18 includes a purchase time notification control unit that performs control to notify a user of an aerosol inhaler 24, of a time of purchasing a product 43 (hereinafter, purchase time notification) based on purchase history information that is history information regarding a purchase of the product 43 using a brand designation device 10. A control unit 19 (Figs. 1 and 8) functions as the purchase time notification control unit.

The purchase time notification control unit may cause a display unit 22 to perform notification regarding a purchase time of the product 43, may cause a display unit or a sound emitting unit of the brand designation device 10 to perform the notification, or may cause a portable information terminal (such as a smartphone) of the user to perform the notification.

The purchase time notification control unit determines a time suitable for the next purchase based on purchase history information, and causes purchase time notification to be performed.

The purchase history information is, for example, purchase time information that is information indicating a time when the product 43 was purchased in the past using the brand designation device 10 or purchase frequency information that is information indicating frequency of purchasing the product 43 using the brand designation device 10. The purchase time information may be information including a day of the week and a time zone.

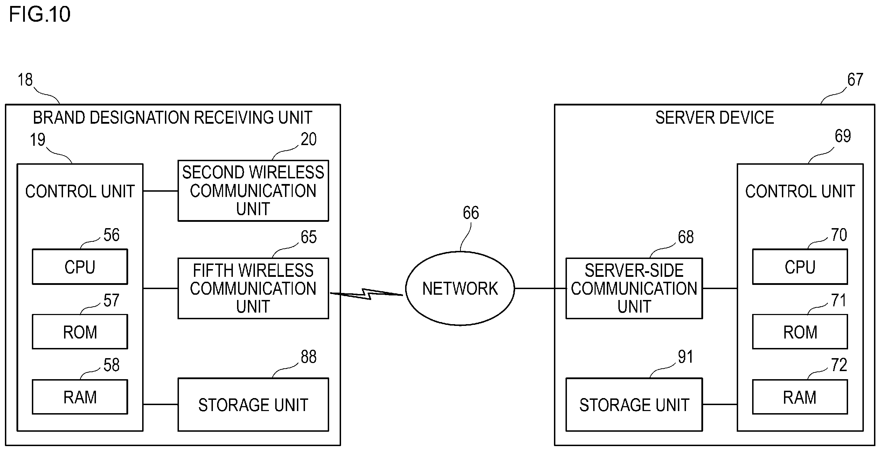

The control unit 19 of the brand designation receiving unit 18 may cause a storage unit 89 to store the purchase history information to manage the purchase history information, or a control unit 11 of the brand designation device 10 may cause the storage unit 88 to store the purchase history information to manage the purchase history information, and transmit the purchase history information to the brand designation receiving unit 18 together when transmitting brand information to the brand designation receiving unit 18. Alternatively, the purchase history information may be acquired by the brand designation receiving unit 18 from a server device 67 (Fig. 10), which will be described below.

It is also preferable that the purchase history information is stored in a storage unit 91 of the server device 67 in association with the user or the brand designation device 10.

Typically, the notification regarding a purchase time by the purchase time notification control unit is not performed for a user who has visited a store intending to purchase a consumable or the like of the aerosol inhaler 24 (for example, a user having operated an operation unit 17 of the brand designation device 10 to designate a brand).

For example, it is preferable that, even if a customer possessing the brand designation device 10 does not operate the operation unit 17 of the brand designation device 10, when a first wireless communication unit 15 of the brand designation device 10 enters a communication range with a second wireless communication unit 20 of the brand designation receiving unit 18, certain information corresponding to the user (such as personal information of the user) is transmitted from the first wireless communication unit 15 to the second wireless communication unit 20, and notification by image display, notification by sound output from a speaker (not shown) included in the brand designation receiving unit 18, and the like are performed automatically.

For example, as shown on a screen G2 in Fig. 9, an image of a product 43 corresponding to brand information is displayed together with display of <Recommended purchase time has come!> and a message such as "Would you like to purchase your usual capsule?, and screen display is performed on which selection of "Yes" or "No" and selection of "Try another flavor" can be performed.

When the user performs a touch operation on a display location of "Yes" on the screen G2 in Fig. 9, a type of the product 43 purchased by the user is determined, and the product 43 is dispensed from the fixture 21. Note that, as described above, before the product 43 is dispensed, the user authentication and the payment processing may be performed.

On the other hand, when the user performs a touch operation on a display location of "No" on the screen G2 in Fig. 9, for example, a message such as "We are looking forward to your next visit" is displayed.

Furthermore, when the user performs a touch operation on a display location of "Try another flavor" on the screen G2 in Fig. 9, display of an image of a product 43 serving as another candidate and display of "Yes" and "No" for making or not making a purchase of the displayed product 43 are further performed, for example.

Here, it is preferable that the purchase history information is history information for each user, which is associated with personal information of the user.

By using such purchase history information, for example, when one user owns a plurality of brand designation devices 10 (a plurality of aerosol inhalers 24, for example), it is possible to centrally manage purchase histories with the plurality of brand designation devices 10, for example. Thus, it is possible to provide more accurate purchase time notification.

More specifically, for example, the purchase history information includes information indicating a time and the number of purchased products regarding each of a plurality of purchases made at different times.

In this case, the purchase time notification control unit includes, for example, a consumption speed calculating unit that calculates a consumption speed of a product based on purchase history information, and a next purchase time determining unit that determines a time suitable for the next purchase based on the consumption speed calculated by the consumption speed calculating unit. Furthermore, the purchase time notification control unit performs control to perform notification of the time determined by the next purchase time determining unit.

For example, if a time from the purchase before last to the last purchase is one week, and the number of purchased products 43 at the purchase before last is seven, the consumption speed calculating unit calculates the consumption speed as seven products/seven days = one product/day. Meanwhile, if the number of purchased products at the last purchase is also seven and six days have passed since the last purchase, the next purchase time determining unit estimates (determines) that 1 × 6 = 6 products 43 have been consumed since the last purchase. Furthermore, for example, it is assumed that a time when a difference between the "number of purchased products at the last purchase" and the "number of consumed products 43 reckoned from the last purchase" is equal to or less than a predetermined number (for example, equal to or less than one) is a time suitable for the next purchase. In this case, the next purchase time determining unit determines that the time suitable for the next purchase has already come.

For this reason, the purchase time notification control unit causes, for example, the display unit 22 to perform display notification such as the screen G2 shown in Fig. 9.

Therefore, the user can recognize that the time suitable for the next purchase of the product 43 has come, and thus can surely purchase the product 43.

Note that, as purchase history information used in a calculation of the consumption speed, information indicating a time of purchase and the number of purchased products before the last two purchases may be used.

In addition, for example, if the number of purchased products at the last purchase is seven and four days have passed since the last purchase, the difference between the "number of purchased products at the last purchase" and the "number of consumed products 43 reckoned from the last purchase" is three, and thus, the next purchase time determining unit determines that the time suitable for the next purchase is two days later (timing at which the remaining one is left).

For this reason, the purchase time notification control unit causes, for example, the display unit 22 to perform display notification such as "We recommend that you purchase additional capsules within the next two days!"

The notification regarding a purchase time by the purchase time notification control unit may be performed by the brand designation device 10 of the user. In this case, the brand designation device 10 includes, for example, a vibration unit (vibrator) that includes a motor or the like and generates vibration, and the vibration unit vibrates in response to a command transmitted from the brand designation receiving unit 18 to perform notification to the user. Alternatively, the brand designation device 10 may include a light emission notification unit including a light emission member such as an LED, and the light emission notification unit may perform notification by light emission. Alternatively, the brand designation device 10 may include a display unit such as a liquid crystal display device, and the display unit may perform notification display.

In addition, it is also preferable that the notification by the brand designation device 10 is linked with notification by image display or notification by sound in the brand designation receiving unit 18. In this case, when the notification is performed by the brand designation device 10, the user can recognize the contents of the notification by paying attention to the display unit 22 of the brand designation receiving unit 18 or the sound output from the brand designation receiving unit 18.

In addition, the notification regarding a purchase time by the purchase time notification control unit may be performed on a portable information terminal (such as a smartphone) owned by the user.

Note that the notification regarding a purchase time by the purchase time notification control unit may be immediately performed to the user who has purchased the product 43 by operating the operation unit 17 of the brand designation device 10 for brand designation. That is, the user who has purchased the product 43 may be immediately notified of the time suitable for the next purchase.

### [Fourth Embodiment]

Next, a fourth embodiment will be described.

A brand designation system according to the present embodiment is different from the brand designation system according to the above-described third embodiment in the points to be described below, and similarly configured to the brand designation system according to the above-described third embodiment in other points.

In the case of the present embodiment, a brand designation receiving unit 18 includes a purchase time notification control unit that performs control to notify a user of an aerosol inhaler 24, of time of purchasing a product 43 (purchase time notification) based on inhale history information that is history information regarding an inhale action using the aerosol inhaler 24. Also in the case of the present embodiment, a control unit 19 (Figs. 1 and 8) functions as the purchase time notification control unit.

The purchase time notification control unit determines a time suitable for the next purchase based on inhale history information, and causes purchase time notification to be performed.

The inhale history information is, for example, the number of inhale times (puff number) and the number of used capsules 31 since the last purchase of the product 43, and the aerosol inhaler 24 includes a sensor or the like that acquires these numerical values.

For example, a control unit 11 of a brand designation device 10 causes a storage unit 88 to store the inhale history information to manage the inhale history information, and transmits the inhale history information to the brand designation receiving unit 18 together when transmitting brand information to the brand designation receiving unit 18.

Furthermore, the inhale history information may be once transmitted from a first wireless communication unit 15 of the brand designation device 10 to a portable information terminal (such as a smartphone) of the user together with identification information (such as a serial number) of the brand designation device 10, and transmitted from the portable information terminal to a server device 67 (Fig. 10), which will be described below, and the server device 67 may manage (store) the inhale history information in association with the identification information of the brand designation device 10.

In this case, the brand designation receiving unit 18 acquires, from the server device 67, inhale history information corresponding to identification information of the brand designation device 10 transmitted from the brand designation device 10 to the brand designation receiving unit 18, and purchase time notification is performed based on the acquired inhale history information.

In the present embodiment, a mode of the purchase time notification is similar to that of the third embodiment, and the purchase time notification control unit displays a screen G2 as shown in Fig. 9, for example.

In the case of the present embodiment, more specifically, for example, the inhale history information includes information indicating the number of purchased products at the last purchase.

The brand designation device 10 includes a puff number counting unit that counts the number of puffs of the user since the last purchase.

The purchase time notification control unit acquires, from the brand designation device 10, information indicating the number of puffs counted by the puff number counting unit.

The purchase time notification control unit includes a consumption number determining unit that determines a consumption number based on information indicating the number of puffs acquired from the brand designation device 10, and a next purchase time determining unit that determines a time suitable for the next purchase based on the consumption number determined by the consumption number determining unit and the number of purchased products at the last purchase. Furthermore, the purchase time notification control unit performs control to perform notification of the time determined by the next purchase time determining unit.

For example, it is assumed that the number of products 43 consumed per 250 puffs is one.

It is also assumed that the number of purchased products at the last purchase is five, and the number of puffs reckoned from the last purchase has reached 1000 puffs. In this case, the consumption number determining unit determines that 1000/250 = four products 43 have been consumed since the last purchase. Furthermore, also in the present embodiment, for example, it is assumed that a time when a difference between the "number of purchased products at the last purchase" and the "number of consumed products 43 reckoned from the last purchase" is equal to or less than a predetermined number (for example, equal to or less than one) is the time suitable for the next purchase.

In this case, the next purchase time determining unit determines that the time suitable for the next purchase has already come.

For this reason, the purchase time notification control unit causes, for example, a display unit 22 to perform display notification such as the screen G2 shown in Fig. 9.

Therefore, the user can recognize that the time suitable for the next purchase of the product 43 has come, and thus can surely purchase the product 43.

In addition, it is preferable that the inhale history information includes information indicating a time of the last purchase.

For example, it is assumed that the number of purchased products at the last purchase is five, and the number of puffs reckoned from the last purchase has reached 500 puffs, and two days have passed since the last purchase. In this case, the consumption number determining unit determines that 500/250 = two products 43 have been consumed since the last purchase. Furthermore, it is also determined that the consumption number per day is two products/two days = one product. Then, the next purchase time determining unit determines that the difference between the "number of purchased products at the last purchase" and the "number of consumed products 43 reckoned from the last purchase" becomes equal to or less than one, two days later. That is, it is determined that the time suitable for the next purchase comes two days later.

For this reason, the purchase time notification control unit causes, for example, the display unit 22 to perform display notification such as "We recommend that you purchase additional capsules within the next two days!"

The brand designation receiving unit 18 may include a table storage unit (storage unit 89) that stores a consumption number table indicating a correspondence relationship between the number of puffs and the consumption number for each type of product.

In this case, the consumption number determining unit determines the consumption number based on the number of puffs counted by the puff number counting unit by referring to the consumption number table.

Similarly to the third embodiment, also in the present embodiment, the notification regarding a purchase time by the purchase time notification control unit may be performed by the brand designation device 10 of the user. In addition, it is also preferable that the notification by the brand designation device 10 is linked with notification by image display or notification by sound in the brand designation receiving unit 18. In addition, the notification regarding a purchase time by the purchase time notification control unit may be performed on a portable information terminal (such as a smartphone) owned by the user. Furthermore, the notification regarding a purchase time by the purchase time notification control unit may be immediately given to the user who has purchased the product 43 by operating an operation unit 17 of the brand designation device 10 for brand designation. That is, the user who has purchased the product 43 may be immediately notified of the time suitable for the next purchase.

### [Fifth Embodiment]

Next, a fifth embodiment will be described with reference to Fig. 10.

A brand designation system according to the present embodiment is different from the brand designation systems according to the above-described embodiments in the points to be described below, and similarly configured to the brand designation system according to any of the above-described embodiments in other points.

As shown in Fig. 10, in the case of the present embodiment, a brand designation receiving unit 18 includes a purchase history storage unit (storage unit 89, for example) that stores purchase history information that is history information regarding a purchase of a product 43 using a brand designation device 10, and an external output unit that externally outputs the purchase history information (fifth wireless communication unit 65, for example). Furthermore, the brand designation system according to the present embodiment includes a server device 67 that collects purchase history information from a plurality of brand designation receiving units 18 and stores the purchase history information (stores the purchase history information in a storage unit 91, which will be described below).

For this reason, it is possible to analyze a purchase behavior of a user by using the purchase history information collected by and stored in the server device 67.

The fifth wireless communication unit 65 connects to a network 66 by wireless communication, and transmits (externally outputs) purchase history information to the server device 67 via the network 66.

Note that the brand designation receiving unit 18 may transmit purchase history information to the server device 67 via the network 66 by wired communication.

Furthermore, the processing of transmitting purchase history information from the brand designation receiving unit 18 to the server device 67 may be occasional processing performed each time a purchase using the brand designation device 10 occurs, or batch processing performed periodically.

The server device 67 includes a server-side communication unit 68 that acquires purchase history information from the fifth wireless communication unit 65 via the network 66, a control unit 69, and the storage unit 91 that is a nonvolatile memory.

The server-side communication unit 68 may perform wired communication with the network 66 or may perform wireless communication with the network 66.

The control unit 69 includes a ROM 71 that stores and holds a control program, a CPU 70 that executes a control operation in accordance with the control program, and a RAM 72 that functions as a work area of the CPU 70.

The purchase history information acquired by the server-side communication unit 68 is input to the control unit 69. The control unit 69 performs processing of causing the storage unit 91 to store the input purchase history information.

It is preferable that the purchase history information includes a date and time of a purchase, a region where the purchase was made, a brand that was purchased, and the number of purchased products.

The date and time may be information including a date and time (time of day), information only on a date, information only on a week, or information only on a month.

The information indicating the region may be information indicating an administrative district, or information indicating a store or a branch name.

It is preferable that the purchase history information also includes personal information (such as personal identification information and personal attribute information) of the user who has made a purchase.

By using the purchase history information, it is possible to know when and where a purchase is made, which brand is purchased, how many products are purchased, and who makes a purchase.

### [Sixth Embodiment]

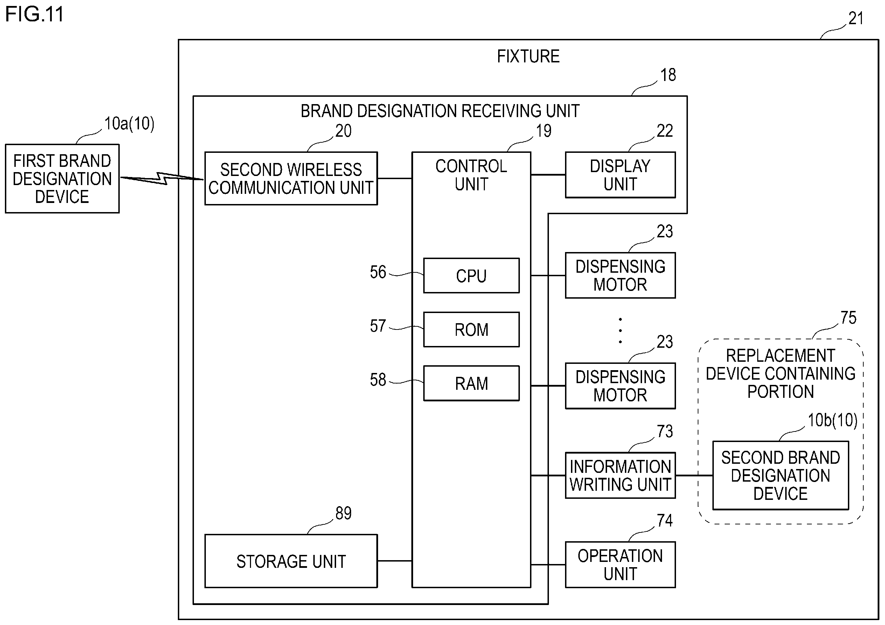

Next, a sixth embodiment will be described with reference to Fig. 11.

A brand designation system according to the present embodiment is different from the brand designation systems according to the above-described embodiments in the points to be described below, and similarly configured to the brand designation system according to any of the above-described embodiments in other points.

Note that, although Fig. 11 shows an example in which a brand designation receiving unit 18 is integrated with a fixture 21 as in the first embodiment, the brand designation receiving unit 18 may be separated from the fixture 21 also in the present embodiment, as in the second embodiment.

In the case of the present embodiment, the brand designation system includes a storage information transfer processing unit that performs processing of causing a second brand designation device 10b to store information recorded in a first brand designation device 10a. Each of the first brand designation device 10a and the second brand designation device 10b is the brand designation device 10 described above.

In the present embodiment, for example, a control unit 19 functions as the storage information transfer processing unit. Information stored in a storage unit 88 (Fig. 1 and the like) of the first brand designation device 10a is transmitted from a first wireless communication unit 15 of the first brand designation device 10a to a second wireless communication unit 20, and the control unit 19 performs processing of causing a storage unit 88 of the second brand designation device 10b to store the information.

The brand designation system includes an information writing unit 73 that stores information in the second brand designation device 10b. In the case of the present embodiment, the fixture 21 includes the information writing unit 73. That is, the control unit 19 controls the information writing unit 73 included in the fixture 21 to cause the storage unit 88 of the second brand designation device 10b to store information.

According to the present embodiment, when a user replaces the brand designation device 10 in a case where the brand designation device 10 becomes unusable due to failure or insufficient battery capacity, it is possible to easily take over information from the first brand designation device 10a, which is an original brand designation device 10, to the second brand designation device 10b, which is a brand designation device 10 as a replacement.

Note that it is also preferable that the information stored in the first brand designation device 10a is stored in advance in a storage unit 89 of the brand designation receiving unit 18 (before the first brand designation device 10a fails).

More specifically, the fixture 21 includes a replacement device containing portion 75 that contains the second brand designation device 10b as a replacement.

In other words, the brand designation system includes the fixture 21 including a device containing portion (replacement device containing portion 75) that contains the second brand designation device 10b.

Furthermore, the storage information transfer processing unit performs processing of causing the second brand designation device 10b to store information in a state where the second brand designation device 10b is contained in the device containing portion.

Here, the replacement device containing portion 75 includes a writing terminal for writing information to the brand designation device 10 (second brand designation device 10b) by directly contacting an external terminal of the brand designation device 10. In a state where the brand designation device 10 is contained in the replacement device containing portion 75, the external terminal of the brand designation device 10 and the writing terminal are in direct contact with each other. The information writing unit 73 writes information from the writing terminal to the second brand designation device 10b contained in the replacement device containing portion 75.

As described above, information is written from the brand designation receiving unit 18 to the second brand designation device 10b not by wireless communication but by communication in a state where the terminals directly contact each other. Therefore, even when a plurality of second brand designation devices 10b is contained in the replacement device containing portion 75, it is possible to selectively write the information to one second brand designation device 10b.

More specifically, the storage unit 88 of the brand designation device 10 stores identification information (such as a serial number and a product number) of the brand designation device 10, personal information of the user, and brand information that is information regarding an inhale brand of the user.

That is, the brand designation device 10 includes a device-side storage unit (storage unit 88) that stores identification information of the brand designation device 10, personal information of the user, and brand information that is information regarding an inhale brand of the user.

### [Seventh Embodiment]

Next, a seventh embodiment will be described.

A brand designation system according to the present embodiment is different from the brand designation systems according to the above-described embodiments in the points to be described below, and similarly configured to the brand designation system according to any of the above-described embodiments in other points.

In the case of the present embodiment, for example, a storage unit 89 of a brand designation receiving unit 18 stores information of a user of a brand designation device 10 in association with identification information (such as a serial number) of the brand designation device 10. For this reason, the brand designation system can manage information for each user.

By managing the information for each user in the brand designation system, for example, it is possible to perform the purchase time notification described above without causing the brand designation device 10 to store the purchase history information and the inhale history information described above.

Furthermore, according to the present embodiment, as described in the sixth embodiment, when the user replaces the brand designation device 10 in a case where the brand designation device 10 becomes unusable due to failure or insufficient battery capacity, it is possible to cause the storage unit 89 to store information of the user stored in association with identification information of a first brand designation device 10a, which is an original brand designation device 10, in association with identification information of a second brand designation device 10b. That is, when the brand designation device 10 is replaced, it is possible to take over the information of the user to a new brand designation device 10 (second brand designation device 10b).

Note that the processing of causing a RAM 58 to store the information of the user in association with the identification information of the second brand designation device 10b is performed, for example, using an operation performed by a clerk or the user as a trigger.

As described above, in the case of the present embodiment, the brand designation system includes a user information storage unit (storage unit 89) that stores information of a user of the brand designation device 10 in association with identification information of the brand designation device 10, and a user information update processing unit (control unit 19) that performs processing of causing the user information storage unit to store the information of the user stored in association with identification information of the first brand designation device 10a, in association with identification information of the second brand designation device 10b, in response to a predetermined trigger.

### [Eighth Embodiment]

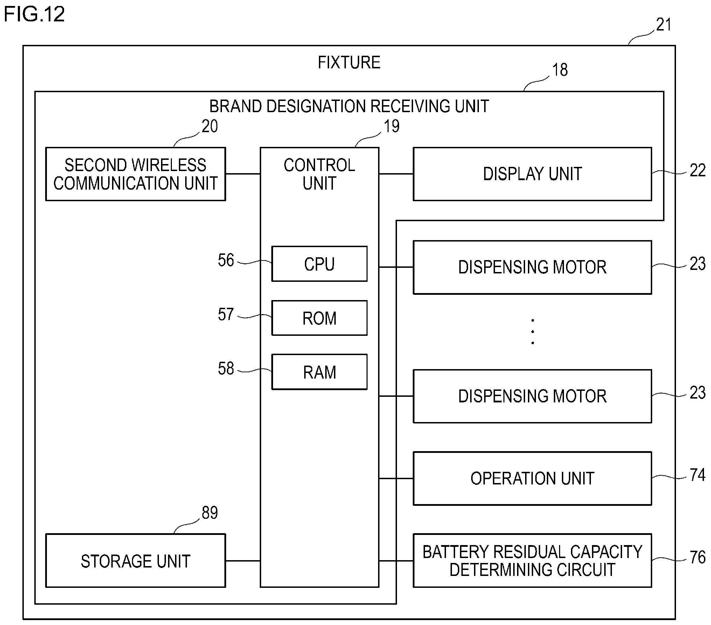

Next, an eighth embodiment will be described with reference to Figs. 12 to 14.

A brand designation system according to the present embodiment is different from the brand designation systems according to the above-described embodiments in the points to be described below, and similarly configured to the brand designation system according to any of the above-described embodiments in other points.

Note that, although Fig. 12 shows an example in which a brand designation receiving unit 18 is integrated with a fixture 21 as in the first embodiment, the brand designation receiving unit 18 may be separated from the fixture 21 also in the present embodiment, as in the second embodiment.

As shown in Fig. 12, in the case of the present embodiment, the brand designation system includes a battery residual capacity determining circuit 76 (battery residual capacity determining unit) that determines a battery residual capacity of a secondary battery 16 (Fig. 1 and the like) of a brand designation device 10. For example, the fixture 21 includes the battery residual capacity determining circuit 76.

Furthermore, a determination result by the battery residual capacity determining circuit 76 is input to a control unit 19.

In addition, the control unit 19 performs control to notify a user of an aerosol inhaler 24, of the battery residual capacity of the secondary battery 16.

As described above, in the case of the present embodiment, the brand designation device 10 includes the secondary battery 16 and is configured to operate in a state where the secondary battery 16 is charged, and the brand designation system includes a battery residual capacity determining unit (battery residual capacity determining circuit 76) that determines a battery residual capacity of the secondary battery 16, and a battery residual capacity notification control unit (control unit 19) that performs control to notify a user of the aerosol inhaler 24, of the battery residual capacity of the secondary battery 16.

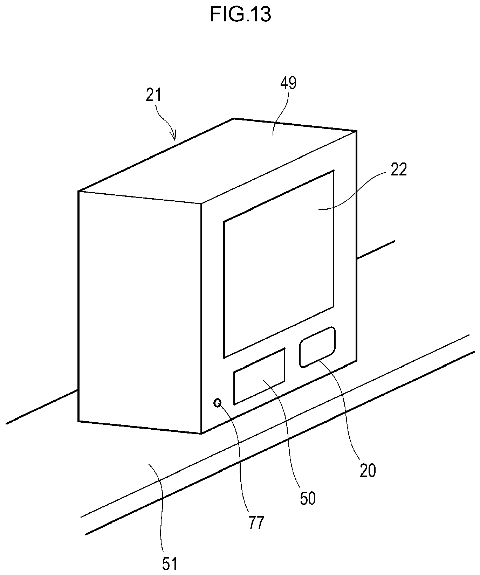

More specifically, for example, as shown in Fig. 13, a charging terminal insertion portion 77 is formed on an outer surface of a housing 49 of the fixture 21. The charging terminal insertion portion 77 is formed, for example, in a shape to be screwed with a charging terminal 27 (Fig. 2B) of an inhaler body portion 25.

Furthermore, when the user screws the charging terminal 27 of the inhaler body portion 25 to the charging terminal insertion portion 77, the charging terminal 27 and the battery residual capacity determining circuit 76 are electrically connected to each other, and the battery residual capacity determining circuit 76 determines the battery residual capacity of the secondary battery 16.

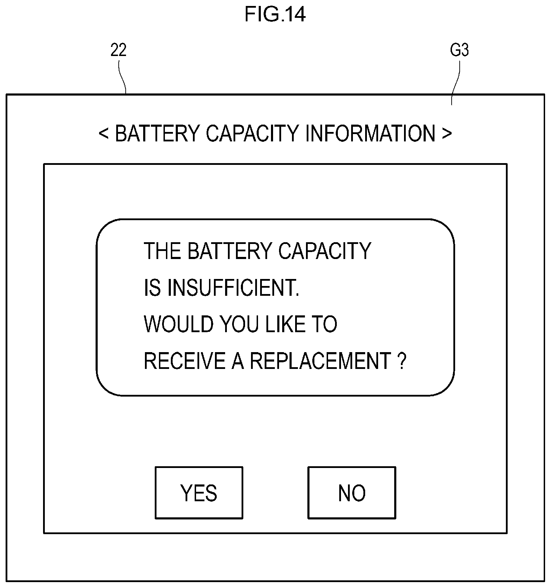

As a result of the determination by the battery residual capacity determining circuit 76, when the battery residual capacity of the secondary battery 16 is insufficient, the control unit 19 performs control to cause a display unit 22 to display a screen G3 as shown in Fig. 14.

In the screen G3, for example, a message such as "The battery capacity is insufficient. Would you like to receive a replacement?" is displayed, and it is possible to select "Yes" or "No".

When the user performs a touch operation on a display location of "Yes" on the screen G3 in Fig. 14, for example, a clerk is notified that "Yes" has been selected, and the clerk can take out a new charged inhaler body portion 25 from a storage location in the fixture 21 or another storage location and provide the new charged inhaler body portion 25 to the user. In addition, when the secondary battery 16 is detachably mounted to the inhaler body portion 25, only a replacement of the secondary battery 16 may be provided to the user.

Therefore, it can be said that the display notification as shown in Fig. 14 is notification that recommends the user to use a replacement of the inhaler body portion 25 or the secondary battery 16.

Furthermore, when the user performs a touch operation on the display location of "Yes", a replacement may be automatically dispensed from the fixture 21.

In addition, when the user performs a touch operation on a display location of "No", the clerk is notified that "No" has been selected.

Note that, instead of the message shown in Fig. 14, a message such as "The battery capacity is insufficient. Would you like to purchase a replacement?" may be displayed. In this case, the clerk can sell the new charged inhaler body portion 25 to the user.

As described above, the brand designation system according to the present embodiment includes a replacement recommendation unit (control unit 19) that recommends a user of the aerosol inhaler 24 to use (receive or purchase) a replacement of the brand designation device 10 (here, inhaler body portion 25) or the secondary battery 16 of the brand designation device 10 when a battery residual capacity of the secondary battery 16 is low.

### [Ninth Embodiment]

Next, a ninth embodiment will be described with reference to Figs. 12, 13, and 15.

A brand designation system according to the present embodiment is different from the brand designation system according to the above-described eighth embodiment in the points to be described below, and similarly configured to the brand designation system according to the above-described eighth embodiment in other points.

In the case of the present embodiment, in a state where a charging terminal 27 of an inhaler body portion 25 is inserted into a charging terminal insertion portion 77 shown in Fig. 13, it is possible to charge a secondary battery 16 by supplying power from the charging terminal insertion portion 77 to the secondary battery 16.

That is, in the case of the present embodiment, the brand designation system includes the charging terminal insertion portion 77 into which the charging terminal 27 included in a brand designation device 10 is inserted to charge the secondary battery 16 of the brand designation device 10.

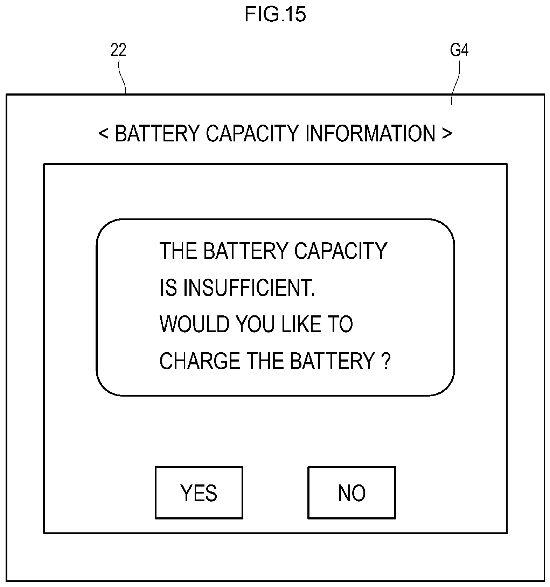

In the case of the present embodiment, as a result of determination by a battery residual capacity determining circuit 76, when it is recognized that a battery residual capacity of the secondary battery 16 is insufficient, a control unit 19 performs control to cause a display unit 22 to display a screen G4 as shown in Fig. 15.

In the screen G4, for example, a message such as "The battery capacity is insufficient. Would you like to charge the battery?" is displayed, and it is possible to select "Yes" or "No".

When a user performs a touch operation on a display location of "Yes" on the screen G4 in Fig. 15, it is possible to charge the secondary battery 16 by continuously supplying power from the charging terminal insertion portion 77 to the secondary battery 16 via the charging terminal 27.

Note that the charging terminal insertion portion 77 may be installed in a place that does not disturb other purchasers, such as an eating space, and a plurality of charging terminal insertion portions 77 may be installed. In this case, when the user performs, as a trigger, a touch operation on the display location of "Yes" on the screen G4, the charging terminal insertion portion 77 may enter an active state where the secondary battery 16 can be charged when the charging terminal 27 is inserted into the charging terminal insertion portion 77.

Furthermore, for example, the user can inhale aerosol using a brand designation device 10 temporarily borrowed from a store while charging the secondary battery 16 of the brand designation device 10 owned by the user.

In addition, it is also preferable that a battery residual capacity notification control unit performs notification of a time required for charging the secondary battery and the number of products that can be inhaled and used after charging.

The contents of this notification can indicate, for example, how many minutes of charging are needed to inhale and use a certain number of capsules 31.

This notification preferably includes display notification, and may include sound notification. However, the notification may be performed only by the sound notification.

It is preferable that the battery residual capacity notification control unit determines a time required for charging the secondary battery based on a current battery residual capacity of the secondary battery, and performs notification of the time required for charging the secondary battery and the number of products that can be inhaled and used after charging.

In addition, the battery residual capacity notification control unit determines the time required for charging the secondary battery based on a deterioration state of the secondary battery, and performs notification of the time required for charging the secondary battery and the number of products that can be inhaled and used after charging.

Furthermore, it is preferable that the battery residual capacity notification control unit performs notification of a time required for a charging amount of the secondary battery to enter a partially charged state that is less than a full charge (full charge), and the number of products that can be inhaled and used in the partially charged state.

### [Tenth Embodiment]

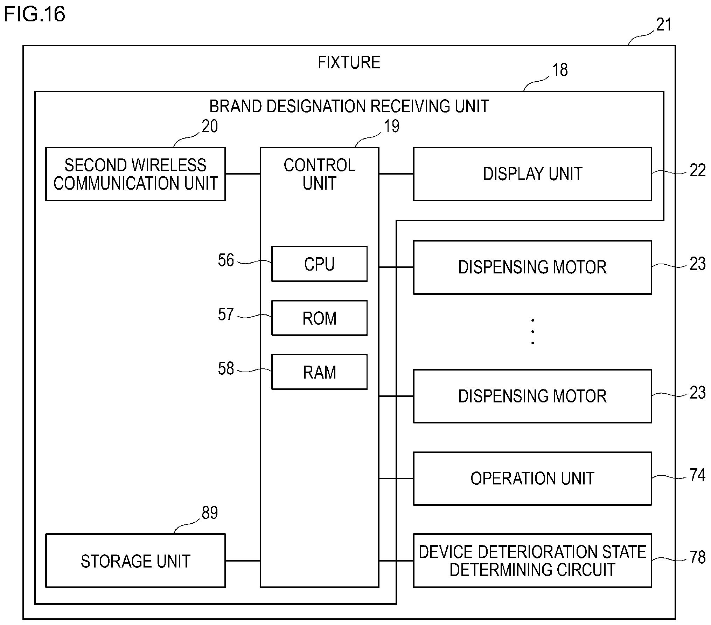

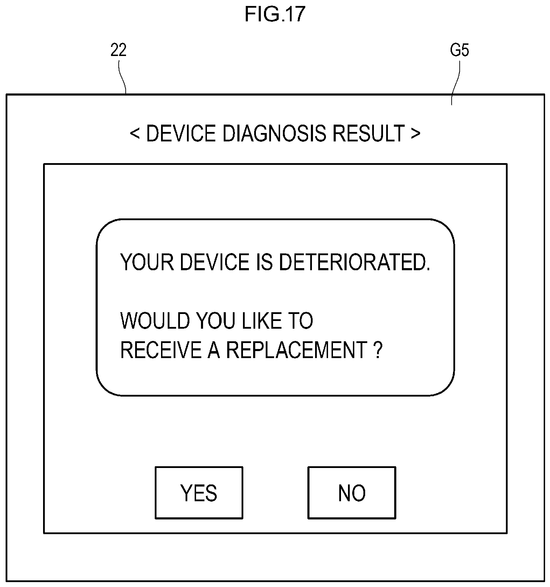

Next, a tenth embodiment will be described with reference to Figs. 16 and 17.

A brand designation system according to the present embodiment is different from the brand designation system according to the above-described eighth embodiment or ninth embodiment in the points to be described below, and similarly configured to the brand designation system according to the above-described eighth embodiment or ninth embodiment in other points.

As shown in Fig. 16, in the case of the present embodiment, the brand designation system includes a device deterioration state determining circuit 78 (deterioration determining unit) that determines a deterioration state of a brand designation device 10. For example, a fixture 21 includes the device deterioration state determining circuit 78.

Furthermore, a determination result by the device deterioration state determining circuit 78 is input to a control unit 19.

In addition, the control unit 19 performs control to notify a user of an aerosol inhaler 24, of the deterioration state of the brand designation device 10.

As described above, in the case of the present embodiment, the brand designation device 10 includes a secondary battery 16 and is configured to operate in a state where the secondary battery 16 is charged, and the brand designation system includes a deterioration determining unit (device deterioration state determining circuit 78) that determines a deterioration state of the brand designation device 10 and a deterioration notification control unit (control unit 19) that performs control to notify a user of the aerosol inhaler 24, of the deterioration state of the brand designation device 10.

More specifically, for example, when the user screws a charging terminal 27 of an inhaler body portion 25 to a charging terminal insertion portion 77 (Fig. 13), the charging terminal 27 and the device deterioration state determining circuit 78 are electrically connected to each other, and the device deterioration state determining circuit 78 determines the deterioration state of the brand designation device 10.

Here, the determination of the deterioration state of the brand designation device 10 may be determination of a deterioration state of the secondary battery 16, determination as to whether there is a malfunction in the brand designation device 10, or determination by a production time of the brand designation device 10 recognized based on a serial number or a product number of the brand designation device 10 (determination as to whether the number of years of use has exceeded a predetermined recommended number of years of use, for example). In addition, the determination of the deterioration state of the brand designation device 10 may include prediction of a replacement time (deterioration time) of the brand designation device 10 or the secondary battery 16.

For example, the brand designation system determines a replacement time (deterioration time) of the brand designation device 10 or the secondary battery 16, performs notification of the replacement time, and recommends the user of the aerosol inhaler 24 to purchase or use a replacement of the brand designation device 10 or the secondary battery 16.

As a result of the determination by the device deterioration state determining circuit 78, when the control unit 19 recognizes that the brand designation device 10 is deteriorated, the control unit 19 performs control to cause a display unit 22 to display a screen G5 as shown in Fig. 17.

In the screen G5, for example, a message such as "Your device is deteriorated. Would you like to receive a replacement?" is displayed, and it is possible to select "Yes" or "No".

When the user performs a touch operation on a display location of "Yes" on the screen G5 in Fig. 17, for example, a clerk is notified that "Yes" has been selected, and the clerk can provide a new inhaler body portion 25 to the user. In addition, when the secondary battery 16 is detachably mounted to the inhaler body portion 25 and it is determined that only the secondary battery 16 is deteriorated, only a replacement of the secondary battery 16 may be provided to the user.

Furthermore, when a replacement of the inhaler body portion 25 is provided to the user, the brand designation receiving unit 18 may register the original inhaler body portion 25 as a failing product and perform order processing for repair to a server device 67 (Fig. 10). For example, the user can have the inhaler body portion 25 repaired simply by putting the original inhaler body portion 25, which is a failing product, in a return envelope given by the clerk and posting the original inhaler body portion 25 in the return envelope.

In addition, the user can inhale aerosol using a replacement of the inhaler body portion 25 received at a store until the repair of the inhaler body portion 25 owned by the user is completed.

Furthermore, instead of the message shown in Fig. 17, a message such as "Your device is deteriorated. Would you like to purchase a replacement?" may be displayed. In this case, the clerk can sell a new inhaler body portion 25 to the user.

In addition, it is also preferable that a replacement is dispensed from the fixture 21 in response to an operation of requesting dispensation.

That is, the brand designation system may include a replacement recommendation unit (display unit 22 that displays the screen G5, for example) that recommends a user of the aerosol inhaler 24 to receive or purchase a replacement of the brand designation device 10 when the brand designation device 10 is deteriorated and the fixture 21 that contains the replacement in a dispensable manner, the brand designation receiving unit 18 may include a replacement dispensing operation unit (display unit 22 that is a touch panel, for example) that receives an operation of requesting dispensation of the replacement, and the fixture 21 may dispense the replacement in response to the operation on the replacement dispensing operation unit.

Note that, separately from a function of the replacement recommendation unit, a replacement may be dispensed in response to an operation of requesting the dispensation.

That is, the brand designation system may include the fixture 21 that contains a replacement of the brand designation device 10 in a dispensable manner, the brand designation receiving unit 18 may include a replacement dispensing operation unit that receives an operation of requesting dispensation of the replacement, and the fixture 21 may dispense the replacement in response to the operation on the replacement dispensing operation unit.

### <Modification>

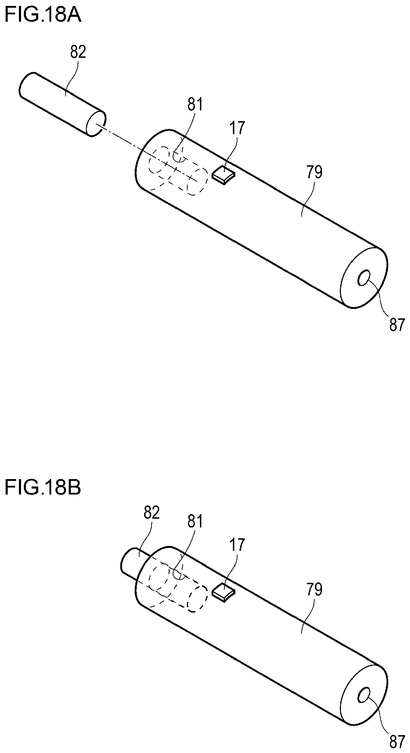

Next, a modification of an aerosol inhaler and an auxiliary device thereof will be described with reference to Figs. 18A to 19B.

As shown in Figs. 18A and 18B, the aerosol inhaler according to the modification includes an inhaler body portion 79 including an insertion hole 81 into which a consumable 82 is detachably inserted and the consumable 82. An operation unit 17 is provided on an outer peripheral surface of the inhaler body portion 79. In the case of the present modification, for example, the aerosol inhaler or the inhaler body portion 79 is a brand designation device 10.

The inhaler body portion 79 includes a terminal portion 87 for charging a secondary battery 16 (Fig. 1 and the like) in the inhaler body portion 79. Note that information may be written from the terminal portion 87 to a RAM 14 (Fig. 1 and the like) in the inhaler body portion 79, and information in the RAM 14 may be output to the outside via the terminal portion 87. Furthermore, via the terminal portion 87, it may be possible to determine a battery residual capacity of the secondary battery 16 and determine a deterioration state of the inhaler body portion 79.

Note that a product 43 is, for example, a rectangular parallelepiped package containing a plurality of consumables 82.

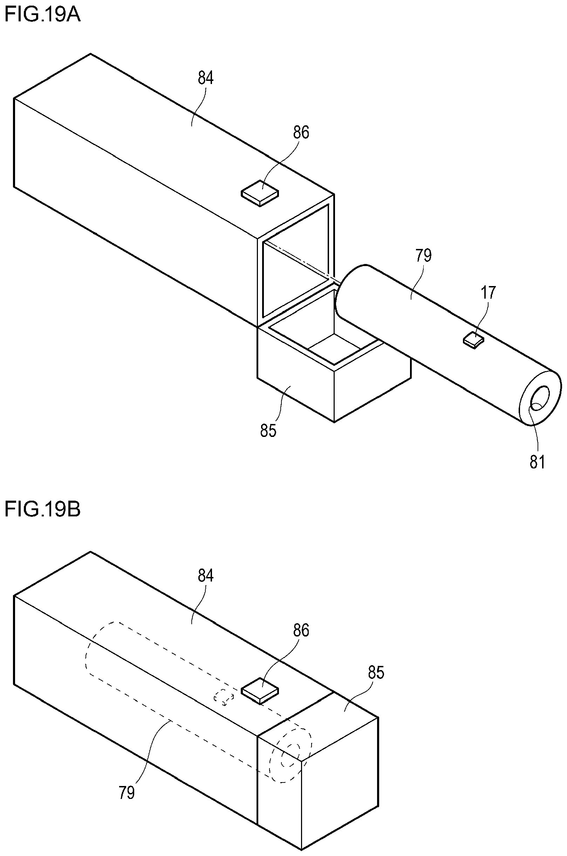

As shown in Figs. 19A and 19B, in the case of the present modification, a charger 84 that charges the secondary battery 16 of the inhaler body portion 79 is used as the auxiliary device of the aerosol inhaler. For example, the charger 84 charges the secondary battery 16 of the inhaler body portion 79 in a state where the inhaler body portion 79 is contained.

That is, the charger 84 also includes a secondary battery (not shown in the drawings), and in a state where the inhaler body portion 79 is contained in the charger 84, the secondary battery 16 is charged when power is supplied from the secondary battery of the charger 84 to the secondary battery 16 of the inhaler body portion 79.

The charger 84 includes, for example, a lid portion 85 that can be opened and closed.

Note that the charger 84 may be the brand designation device 10, and in this case, the charger 84 may include an operation unit 86 similar to the operation unit 17.

Although the embodiments have been described above with reference to the drawings, these are exemplifications of the present invention, and various configurations other than those described above can be adopted.

For example, in the above description, the example has been described in which the first communication unit is the first wireless communication unit 15, the second communication unit is the second wireless communication unit 20, and the first wireless communication unit 15 and the second wireless communication unit 20 perform wireless communication. However, the first communication unit and the second communication unit may perform wired communication, or may communicate in a state where a terminal of the first communication unit and a terminal of the second communication unit are in direct contact with each other.

For example, in a state where the charging terminal 27 of the inhaler body portion 25 is inserted into the charging terminal insertion portion 77 shown in Fig. 13, the first wireless communication unit 15 in the inhaler body portion 25 and the second wireless communication unit 20 of the brand designation receiving unit 18 may communicate with each other.

Furthermore, in the above description, the example has been described in which the brand designation device 10 includes the operation unit 17 (or the operation unit 86). However, the brand designation device 10 does not have to include the operation unit 17 (or the operation unit 86). For example, when the brand designation device 10 (first wireless communication unit 15) is brought close to the second wireless communication unit 20, the first wireless communication unit 15 and the second wireless communication unit 20 may automatically perform wireless communication to designate a brand.

Furthermore, the brand information for each user does not have to be stored in the brand designation device 10. For example, brand information may be stored in the brand designation receiving unit 18 in association with identification information (such as a serial number) of the brand designation device 10, and a brand may be designated by brand information corresponding to identification information of the brand designation device 10 transmitted from the brand designation device 10 to the brand designation receiving unit 18.

Furthermore, the brand information for each user may be stored in the server device 67. In this case, the brand designation receiving unit 18 acquires, from the server device 67, brand information corresponding to identification information of the brand designation device 10 transmitted from the brand designation device 10 to the brand designation receiving unit 18, and a brand is designated by the acquired brand information.

Furthermore, in the above description, the example has been described in which a brand is designated by brand information. However, the brand designation device 10 may function as a remote controller, and by an operation of the brand designation device 10, an operation of moving a pointer or a selection determination operation may be possible on a screen of the display unit 22, for example.

Furthermore, in the above description, the example has been described in which the designated product 43 is automatically dispensed from the fixture 21. However, a clerk may be notified (notified by light emission, for example) of a containing location (storage location) of the designated product 43, and the clerk may take out the product 43 upon receiving the notification.

In addition, when communication occurs between the first wireless communication unit 15 of an old product of the aerosol inhaler 24 and the second wireless communication unit 20 of the brand designation receiving unit 18 after a new product of the aerosol inhaler 24 has been released, notification that the new product of the aerosol inhaler 24 has been released may be performed by the display unit 22 or the like.

In addition, a purchase of the product 43 by brand designation using the brand designation device 10 and a purchase of the product 43 by brand designation using a portable information terminal (such as a smartphone) different from the brand designation device 10 may be used in combination. In this case, it is preferable that the purchase history information described above is information in which first purchase history information indicating a history of purchasing the product 43 by brand designation using the brand designation device 10 and second purchase history information indicating a history of purchasing the product 43 by brand designation using the portable information terminal are integrated.

Furthermore, in the above-described first embodiment, the example has been described in which, after brand information is transmitted from the brand designation device 10 to the brand designation receiving unit 18, the dispensing portion 53 dispenses a designated type of product when an operation is performed on the designated product dispensing operation unit (display unit 22, which is a touch panel, of the brand designation receiving unit 18, for example). However, the present invention is not limited to this example, and the dispensing portion 53 may dispense the designated type of product when the brand information is transmitted from the brand designation device 10 to the brand designation receiving unit 18 by an operation on the operation unit 17.

That is, the brand designation device 10 may include the brand information storage unit (storage unit 88) that stores brand information that is information regarding an inhale brand of a user of the aerosol inhaler, and the operation unit 17 that receives an operation for transmitting the brand information from the first wireless communication unit 15 to the second wireless communication unit 20, the second wireless communication unit 20 may acquire the brand information from the first wireless communication unit 15 by short-range wireless communication when the brand information is transmitted from the first wireless communication unit 15 to the second wireless communication unit 20 by the operation performed on the operation unit 17, the brand designation receiving unit 18 may recognize, as a designated product, a product associated with the brand information acquired by the second wireless communication unit 20, and the dispensing portion 53 may dispense the recognized product.

By doing so, it is possible to dispense the designated type of product from the dispensing portion by a user of the brand designation device only operating the operation unit 17.

Note that various components of the present invention do not have to exist independently of each other. One component may be a part of another component, and a part of a certain component and a part of another component may be overlapped, for example.

The present embodiment includes the following technical concepts.
<1> A brand designation system for an aerosol inhaler, including a brand designation receiving unit that receives designation of a brand by a brand designation device that is the aerosol inhaler or an auxiliary device of the aerosol inhaler, wherein
   the brand designation receiving unit includes a second communication unit that communicates with a first communication unit included in the brand designation device, and
   a type of a product can be designated from among a plurality of types of products including consumables of the aerosol inhaler when the second communication unit and the first communication unit communicate with each other.
<2> The brand designation system for an aerosol inhaler according to <1>, wherein the first communication unit is a first wireless communication unit,
   the second communication unit is a second wireless communication unit that performs wireless communication with the first wireless communication unit, and
   a type of a product can be designated from among a plurality of types of products including consumables of the aerosol inhaler when the second wireless communication unit and the first wireless communication unit perform the wireless communication.
<3> The brand designation system for an aerosol inhaler according to <2>, wherein the brand designation device includes a brand information storage unit that stores brand information that is information regarding an inhale brand of a user of the aerosol inhaler,
   the second wireless communication unit acquires the brand information from the first wireless communication unit by the wireless communication, and
   the brand designation receiving unit recognizes a product associated with the brand information acquired by the second wireless communication unit as a designated product.
<4> The brand designation system for an aerosol inhaler according to <2> or <3>, wherein the brand designation system includes a fixture including a product containing portion that contains the plurality of types of products, and a dispensing portion that dispenses, from the product containing portion, a product of a type designated by the wireless communication between the second wireless communication unit and the first wireless communication unit.
<5> The brand designation system for an aerosol inhaler according to <4>, wherein the brand designation system includes a designated product dispensing operation unit that receives an operation of requesting dispensation of the product of the type designated by the wireless communication, and
   the dispensing portion dispenses the designated type of product in response to the operation on the designated product dispensing operation unit.
<6> The brand designation system for an aerosol inhaler according to <4>, wherein the brand designation device includes
   a brand information storage unit that stores brand information that is information regarding an inhale brand of a user of the aerosol inhaler, and
   an operation unit that receives an operation for transmitting the brand information from the first wireless communication unit to the second wireless communication unit,
   the second wireless communication unit acquires the brand information from the first wireless communication unit by short-range wireless communication when the brand information is transmitted from the first wireless communication unit to the second wireless communication unit by the operation performed on the operation unit,
   the brand designation receiving unit recognizes, as a designated product, a product associated with the brand information acquired by the second wireless communication unit, and
   the dispensing portion dispenses the recognized product.
<7> The brand designation system for an aerosol inhaler according to any one of <1> to <6>, wherein the brand designation receiving unit includes a purchase time notification control unit that performs control to notify a user of the aerosol inhaler, of a time of purchasing a product based on purchase history information that is history information regarding a purchase of the product using the brand designation device.
<8> The brand designation system for an aerosol inhaler according to <7>, wherein the purchase history information includes information indicating a time and the number of purchased products regarding each of a plurality of purchases made at different times,
   the purchase time notification control unit includes
   a consumption speed calculating unit that calculates a consumption speed of a product based on the purchase history information, and
   a next purchase time determining unit that determines a time suitable for a next purchase based on the consumption speed calculated by the consumption speed calculating unit, and
   performs control to perform notification of the time determined by the next purchase time determining unit.
<9> The brand designation system for an aerosol inhaler according to any one of <1> to <8>, wherein the brand designation receiving unit includes
   a purchase history storage unit that stores purchase history information that is history information regarding a purchase of a product using the brand designation device, and
   an external output unit that externally outputs the purchase history information, and
   the brand designation system further includes a server device that collects the purchase history information from a plurality of the brand designation receiving units and stores the purchase history information.
<10> The brand designation system for an aerosol inhaler according to <9>, wherein the server device stores the purchase history information in association with a user or the brand designation device.
<11> The brand designation system for an aerosol inhaler according to <9> or <10>, wherein the purchase history information includes a date and time of a purchase, a region where the purchase was made, a brand that was purchased, and the number of purchased products.
<12> The brand designation system for an aerosol inhaler according to any one of <1> to <11>, wherein the brand designation receiving unit includes a purchase time notification control unit that performs control to notify a user of the aerosol inhaler, of a time of purchasing the product based on inhale history information that is history information regarding an inhale action using the aerosol inhaler.
<13> The brand designation system for an aerosol inhaler according to <12>, wherein the inhale history information includes information indicating the number of purchased products at a last purchase,
   the brand designation device includes a puff number counting unit that counts the number of puffs of the user since the last purchase, and
   the purchase time notification control unit includes
   a consumption number determining unit that determines a consumption number based on information indicating the number of puffs acquired from the brand designation device, and
   a next purchase time determining unit that determines a time suitable for a next purchase based on the consumption number determined by the consumption number determining unit and the number of purchased products at the last purchase, and
   performs control to perform notification of the time determined by the next purchase time determining unit.
<14> The brand designation system for an aerosol inhaler according to any one of <1> to <13>, wherein the brand designation system includes
   a storage information transfer processing unit that performs processing of causing a second brand designation device to store information recorded in a first brand designation device, and
   a fixture including a device containing portion that contains the second brand designation device, and
   the storage information transfer processing unit performs processing of causing the second brand designation device to store the information in a state where the second brand designation device is contained in the device containing portion.
<15> The brand designation system for an aerosol inhaler according to any one of <1> to <14>, wherein the brand designation system includes a user information storage unit that stores information of a user of the brand designation device in association with identification information of the brand designation device, and
   a user information update processing unit that performs processing of causing the user information storage unit to store information of the user stored in association with identification information of a first brand designation device, in association with identification information of a second brand designation device, in response to a predetermined trigger.
<16> The brand designation system for an aerosol inhaler according to any one of <1> to <15>, wherein the brand designation device includes a secondary battery and is configured to operate in a state where the secondary battery is charged, and
   the brand designation system includes
   a battery residual capacity determining unit that determines a battery residual capacity of the secondary battery, and
   a battery residual capacity notification control unit that performs control to notify a user of the aerosol inhaler, of the battery residual capacity of the secondary battery.
<17> The brand designation system for an aerosol inhaler according to <16>, including a charging terminal insertion portion into which a charging terminal included in the brand designation device is inserted to charge the secondary battery of the brand designation device.
<18> The brand designation system for an aerosol inhaler according to <17>, wherein the battery residual capacity notification control unit performs notification of a time required for charging the secondary battery and the number of products that can be inhaled and used after charging.
<19> The brand designation system for an aerosol inhaler according to any one of <1> to <18>, wherein the brand designation device includes a secondary battery and is configured to operate in a state where the secondary battery is charged, and
   the brand designation system includes
   a deterioration determining unit that determines a deterioration state of the brand designation device, and
   a deterioration notification control unit that performs control to notify a user of the aerosol inhaler, of the deterioration state of the brand designation device.
<20> The brand designation system for an aerosol inhaler according to <19>, wherein the brand designation system includes
   a replacement recommendation unit that recommends a user of the aerosol inhaler to receive or purchase a replacement of the brand designation device when the brand designation device is deteriorated, and
   a fixture that contains the replacement in a dispensable manner,
   the brand designation receiving unit includes a replacement dispensing operation unit that receives an operation of requesting dispensation of the replacement, and
   the fixture dispenses the replacement in response to the operation on the replacement dispensing operation unit.
<21> The brand designation system for an aerosol inhaler according to any one of <1> to <19>, wherein the brand designation system includes a fixture that contains a replacement of the brand designation device in a dispensable manner,
   the brand designation receiving unit includes a replacement dispensing operation unit that receives an operation of requesting dispensation of the replacement, and
   the fixture dispenses the replacement in response to the operation on the replacement dispensing operation unit.
<22> A brand designation system for an aerosol inhaler, including a brand designation receiving unit that receives designation of a brand by a brand designation device that is the aerosol inhaler or an auxiliary device of the aerosol inhaler, wherein
   the brand designation receiving unit includes a second communication unit that communicates with a first communication unit included in the brand designation device,
   a type of a product can be designated from among a plurality of types of products including consumables of the aerosol inhaler when the second communication unit and the first communication unit communicate with each other,
   the brand designation system includes
   a storage information transfer processing unit that performs processing of causing a second brand designation device to store information recorded in a first brand designation device, and
   a fixture including a device containing portion that contains the second brand designation device, and
   the storage information transfer processing unit performs processing of causing the second brand designation device to store the information in a state where the second brand designation device is contained in the device containing portion.
<23> A brand designation system for an aerosol inhaler, including a brand designation receiving unit that receives designation of a brand by a brand designation device that is the aerosol inhaler or an auxiliary device of the aerosol inhaler, wherein
   the brand designation receiving unit includes a second communication unit that communicates with a first communication unit included in the brand designation device,
   a type of a product can be designated from among a plurality of types of products including consumables of the aerosol inhaler when the second communication unit and the first communication unit communicate with each other,
   the brand designation device includes a secondary battery and is configured to operate in a state where the secondary battery is charged,
   the brand designation system includes
   a battery residual capacity determining unit that determines a battery residual capacity of the secondary battery,
   a battery residual capacity notification control unit that performs control to notify a user of the aerosol inhaler, of the battery residual capacity of the secondary battery,
   a replacement recommendation unit that recommends a user of the aerosol inhaler to receive or purchase a replacement of the brand designation device or the secondary battery of the brand designation device when the battery residual capacity of the secondary battery is low, and
   a fixture that contains the replacement in a dispensable manner, and
   the fixture dispenses the replacement when a request operation of requesting dispensation of the replacement is performed on the brand designation receiving unit.

Furthermore, the present embodiment includes the following technical concepts.
(1) A brand designation system for an aerosol inhaler, including a brand designation receiving unit that receives designation of a brand by a brand designation device that is the aerosol inhaler or an auxiliary device of the aerosol inhaler, wherein
   the brand designation receiving unit includes a second wireless communication unit that performs wireless communication with a first wireless communication unit included in the brand designation device, and
   a type of a product can be designated from among a plurality of types of products including consumables of the aerosol inhaler when the second wireless communication unit and the first wireless communication unit perform the wireless communication.
(2) The brand designation system for an aerosol inhaler according to any one of the above items, wherein the first wireless communication unit and the second wireless communication unit perform short-range wireless communication.
(3) The brand designation system for an aerosol inhaler according to (2), wherein the short-range wireless communication is Near Field Communication (NFC), and
   the brand designation system includes a plurality of the brand designation receiving units arranged out of a communication range of NFC with respect to each other.
(4) The brand designation system for an aerosol inhaler according to any one of the above items wherein the fixture includes a housing in which the product containing portion is provided, and
   the brand designation receiving unit is provided to the housing.
(5) The brand designation system for an aerosol inhaler according to any one of the above items, wherein the purchase history information is history information for each user, which is associated with personal information of the user.
(6) The brand designation system for an aerosol inhaler according to any one of the above items, wherein the brand designation system includes a storage information transfer processing unit that performs processing of causing a second brand designation device to store information recorded in a first brand designation device.
(7) The brand designation system for an aerosol inhaler according to any one of the above items, wherein the brand designation system includes a fixture including a device containing portion that contains the second brand designation device, and
   the storage information transfer processing unit performs processing of causing the second brand designation device to store the information in a state where the second brand designation device is contained in the device containing portion.
(8) The brand designation system for an aerosol inhaler according to any one of the above items, wherein the brand designation device includes a device-side storage unit that stores identification information of the brand designation device, personal information of a user, and brand information that is information regarding an inhale brand of the user.
(9) The brand designation system for an aerosol inhaler according to any one of the above items, including a replacement recommendation unit that recommends a user of the aerosol inhaler to use a replacement of the brand designation device or the secondary battery of the brand designation device when a battery residual capacity of the secondary battery is low.
(10) The brand designation system for an aerosol inhaler according to any one of the above items, wherein the brand designation system includes a payment processing unit that makes payment of a price of the product when the second wireless communication unit and the first wireless communication unit perform the wireless communication.

This application claims priority based on Japanese Patent Application No. 2017-249807 filed on December 26, 2017, the entire disclosure of which is incorporated herein.

### REFERENCE SIGNS LIST

10 Brand designation device
10a First brand designation device
10b Second brand designation device
11 Control unit
12 CPU
13 ROM
14 RAM
15 First wireless communication unit (first communication unit)
16 Secondary battery
17 Operation unit
18 Brand designation receiving unit
19 Control unit
20 Second wireless communication unit (second communication unit)
21 Fixture
22 Display unit
23 Dispensing motor
24 Aerosol inhaler
25 Inhaler body portion
27 Charging terminal
28 Cartridge (consumable)
29 Mounting portion
30 Insertion hole
31 Capsule (consumable)
32 Suction port
33 Mounted portion
34 Charger
35 Charging terminal insertion portion
36 Terminal
37 Charging plug
38 Terminal insertion portion
39 Power supply terminal
40 Case
41 Case body
42 Lid portion
43 Product
44 Collective package
45 Film
46 Cartridge package
47 Film
48 Cap
49 Housing
50 Takeout port
51 Cashier counter
52 Product column
53 Dispensing portion
54 Discharging port
55 Shooter
56 CPU
57 ROM
58 RAM
59 Third wireless communication unit
60 Control unit
61 CPU
62 ROM
63 RAM
64 Fourth wireless communication unit
65 Fifth wireless communication unit
66 Network
67 Server device
68 Server-side communication unit
69 Control unit
70 CPU
71 ROM
72 RAM
73 Information writing unit
74 Operation unit
75 Replacement device containing portion
76 Battery residual capacity determining circuit (battery residual capacity determining unit)
77 Charging terminal insertion portion
78 Device deterioration state determining circuit (deterioration determining unit)
79 Inhaler body portion
81 Insertion hole
82 Consumable
84 Charger
85 Lid portion
86 Operation unit
87 Terminal portion
88 Storage unit
89 Storage unit
90 Storage unit
91 Storage unit

## Claims

1. A brand designation system for an aerosol inhaler, comprising a brand designation receiving unit that receives designation of a brand by a brand designation device that is the aerosol inhaler or an auxiliary device of the aerosol inhaler, wherein
the brand designation receiving unit includes a second communication unit that communicates with a first communication unit included in the brand designation device, and
a type of a product can be designated from among a plurality of types of products including consumables of the aerosol inhaler when the second communication unit and the first communication unit communicate with each other.

2. The brand designation system for an aerosol inhaler according to claim 1, wherein the first communication unit is a first wireless communication unit,
the second communication unit is a second wireless communication unit that performs wireless communication with the first wireless communication unit, and
a type of a product can be designated from among a plurality of types of products including consumables of the aerosol inhaler when the second wireless communication unit and the first wireless communication unit perform the wireless communication.

3. The brand designation system for an aerosol inhaler according to claim 2, wherein the brand designation device includes a brand information storage unit that stores brand information that is information regarding an inhale brand of a user of the aerosol inhaler,
the second wireless communication unit acquires the brand information from the first wireless communication unit by the wireless communication, and
the brand designation receiving unit recognizes a product associated with the brand information acquired by the second wireless communication unit as a designated product.

4. The brand designation system for an aerosol inhaler according to claim 2 or 3, wherein the brand designation system comprises a fixture including a product containing portion that contains the plurality of types of products, and a dispensing portion that dispenses, from the product containing portion, a product of a type designated by the wireless communication between the second wireless communication unit and the first wireless communication unit.

5. The brand designation system for an aerosol inhaler according to claim 4, wherein the brand designation system comprises a designated product dispensing operation unit that receives an operation of requesting dispensation of the product of the type designated by the wireless communication, and
the dispensing portion dispenses the designated type of product in response to the operation on the designated product dispensing operation unit.

6. The brand designation system for an aerosol inhaler according to claim 4, wherein the brand designation device includes
a brand information storage unit that stores brand information that is information regarding an inhale brand of a user of the aerosol inhaler, and
an operation unit that receives an operation for transmitting the brand information from the first wireless communication unit to the second wireless communication unit,
the second wireless communication unit acquires the brand information from the first wireless communication unit by short-range wireless communication when the brand information is transmitted from the first wireless communication unit to the second wireless communication unit by the operation performed on the operation unit,
the brand designation receiving unit recognizes, as a designated product, a product associated with the brand information acquired by the second wireless communication unit, and
the dispensing portion dispenses the recognized product.

7. The brand designation system for an aerosol inhaler according to any one of claims 1 to 6, wherein the brand designation receiving unit includes a purchase time notification control unit that performs control to notify a user of the aerosol inhaler, of a time of purchasing a product based on purchase history information that is history information regarding a purchase of the product using the brand designation device.

8. The brand designation system for an aerosol inhaler according to claim 7, wherein the purchase history information includes information indicating a time and the number of purchased products regarding each of a plurality of purchases made at different times,
the purchase time notification control unit includes
a consumption speed calculating unit that calculates a consumption speed of a product based on the purchase history information, and
a next purchase time determining unit that determines a time suitable for a next purchase based on the consumption speed calculated by the consumption speed calculating unit, and
performs control to perform notification of the time determined by the next purchase time determining unit.

9. The brand designation system for an aerosol inhaler according to any one of claims 1 to 8, wherein the brand designation receiving unit includes
a purchase history storage unit that stores purchase history information that is history information regarding a purchase of a product using the brand designation device, and
an external output unit that externally outputs the purchase history information, and
the brand designation system further comprises a server device that collects the purchase history information from a plurality of the brand designation receiving units and stores the purchase history information.

10. The brand designation system for an aerosol inhaler according to claim 9, wherein the server device stores the purchase history information in association with a user or the brand designation device.

11. The brand designation system for an aerosol inhaler according to claim 9 or 10, wherein the purchase history information includes a date and time of a purchase, a region where the purchase was made, a brand that was purchased, and the number of purchased products.

12. The brand designation system for an aerosol inhaler according to any one of claims 1 to 11, wherein the brand designation receiving unit includes a purchase time notification control unit that performs control to notify a user of the aerosol inhaler, of a time of purchasing the product based on inhale history information that is history information regarding an inhale action using the aerosol inhaler.

13. The brand designation system for an aerosol inhaler according to claim 12, wherein the inhale history information includes information indicating the number of purchased products at a last purchase,
the brand designation device includes a puff number counting unit that counts the number of puffs of the user since the last purchase, and
the purchase time notification control unit includes a consumption number determining unit that determines a consumption number based on information indicating the number of puffs acquired from the brand designation device, and
a next purchase time determining unit that determines a time suitable for a next purchase based on the consumption number determined by the consumption number determining unit and the number of purchased products at the last purchase, and
performs control to perform notification of the time determined by the next purchase time determining unit.

14. The brand designation system for an aerosol inhaler according to any one of claims 1 to 13, wherein the brand designation system comprises:
a storage information transfer processing unit that performs processing of causing a second brand designation device to store information recorded in a first brand designation device; and
a fixture including a device containing portion that contains the second brand designation device, and
the storage information transfer processing unit performs processing of causing the second brand designation device to store the information in a state where the second brand designation device is contained in the device containing portion.

15. The brand designation system for an aerosol inhaler according to any one of claims 1 to 14, wherein the brand designation system comprises:
a user information storage unit that stores information of a user of the brand designation device in association with identification information of the brand designation device; and
a user information update processing unit that performs processing of causing the user information storage unit to store information of the user stored in association with identification information of a first brand designation device, in association with identification information of a second brand designation device, in response to a predetermined trigger.

16. The brand designation system for an aerosol inhaler according to any one of claims 1 to 15, wherein the brand designation device includes a secondary battery and is configured to operate in a state where the secondary battery is charged, and
the brand designation system comprises:
a battery residual capacity determining unit that determines a battery residual capacity of the secondary battery; and
a battery residual capacity notification control unit that performs control to notify a user of the aerosol inhaler, of the battery residual capacity of the secondary battery.

17. The brand designation system for an aerosol inhaler according to claim 16, comprising a charging terminal insertion portion into which a charging terminal included in the brand designation device is inserted to charge the secondary battery of the brand designation device.

18. The brand designation system for an aerosol inhaler according to claim 17, wherein the battery residual capacity notification control unit performs notification of a time required for charging the secondary battery and the number of products that can be inhaled and used after charging.

19. The brand designation system for an aerosol inhaler according to any one of claims 1 to 18, wherein the brand designation device includes a secondary battery and is configured to operate in a state where the secondary battery is charged, and
the brand designation system comprises:
a deterioration determining unit that determines a deterioration state of the brand designation device; and
a deterioration notification control unit that performs control to notify a user of the aerosol inhaler, of the deterioration state of the brand designation device.

20. The brand designation system for an aerosol inhaler according to claim 19, wherein the brand designation system comprises:
a replacement recommendation unit that recommends a user of the aerosol inhaler to receive or purchase a replacement of the brand designation device when the brand designation device is deteriorated; and
a fixture that contains the replacement in a dispensable manner,
the brand designation receiving unit includes a replacement dispensing operation unit that receives an operation of requesting dispensation of the replacement, and
the fixture dispenses the replacement in response to the operation on the replacement dispensing operation unit.

21. The brand designation system for an aerosol inhaler according to any one of claims 1 to 19, wherein the brand designation system comprises a fixture that contains a replacement of the brand designation device in a dispensable manner,
the brand designation receiving unit includes a replacement dispensing operation unit that receives an operation of requesting dispensation of the replacement, and
the fixture dispenses the replacement in response to the operation on the replacement dispensing operation unit.

22. A brand designation system for an aerosol inhaler, comprising a brand designation receiving unit that receives designation of a brand by a brand designation device that is the aerosol inhaler or an auxiliary device of the aerosol inhaler, wherein
the brand designation receiving unit includes a second communication unit that communicates with a first communication unit included in the brand designation device,
a type of a product can be designated from among a plurality of types of products including consumables of the aerosol inhaler when the second communication unit and the first communication unit communicate with each other,
the brand designation system comprises:
a storage information transfer processing unit that performs processing of causing a second brand designation device to store information recorded in a first brand designation device; and
a fixture including a device containing portion that contains the second brand designation device, and
the storage information transfer processing unit performs processing of causing the second brand designation device to store the information in a state where the second brand designation device is contained in the device containing portion.

23. A brand designation system for an aerosol inhaler, comprising a brand designation receiving unit that receives designation of a brand by a brand designation device that is the aerosol inhaler or an auxiliary device of the aerosol inhaler, wherein
the brand designation receiving unit includes a second communication unit that communicates with a first communication unit included in the brand designation device,
a type of a product can be designated from among a plurality of types of products including consumables of the aerosol inhaler when the second communication unit and the first communication unit communicate with each other,
the brand designation device includes a secondary battery and is configured to operate in a state where the secondary battery is charged,
the brand designation system comprises:
a battery residual capacity determining unit that determines a battery residual capacity of the secondary battery;
a battery residual capacity notification control unit that performs control to notify a user of the aerosol inhaler, of the battery residual capacity of the secondary battery;
a replacement recommendation unit that recommends a user of the aerosol inhaler to receive or purchase a replacement of the brand designation device or the secondary battery of the brand designation device when the battery residual capacity of the secondary battery is low; and
a fixture that contains the replacement in a dispensable manner, and
the fixture dispenses the replacement when a request operation of requesting dispensation of the replacement is performed on the brand designation receiving unit.
